# FASCICULE DE BREVET EUROPEEN

(11) **EP 1 348 623 B1**
(45) Date de publication et mention de la délivrance du brevet: **29.12.2004**
(21) Numéro de dépôt: 03290679.4
(22) Date de dépôt: 18.03.2003
(51) Int. Cl.: B64C 27/52, B64C 29/00, B64C 27/28, F16D 3/70

(54) **Rotor de giravion à entraînement homocinétique avec différentiel de partage de couple**
Drehflüglerrotor mit homokinetischem Gelenk mit leistungsverzweigender Differentialwirkung
Rotorcraft rotor with constant velocity joint and a torque-splitting differential

(30) Priorité: 28.03.2002 FR 0203913
(43) Date de publication de la demande: 01.10.2003
(73) Titulaire: EUROCOPTER, 13725 Marignane Cédex (FR)
(72) Inventeur: Zoppitelli, Ellio, 13880 Velaux (FR); Cornille, Eric, 13300 Salon (FR)
(74) Mandataire: Renaud-Goud, Thierry

(56) Documents cités:
- EP-A- 0 276 945
- EP-A- 1 088 755
- US-A- 4 729 753

## Description

L'invention concerne un rotor de giravion à entraînement homocinétique, en particulier pour un aéronef convertible supportant deux ailes généralement fixes et à au moins un rotor basculant.

Bien que le rotor à entraînement homocinétique de l'invention soit utilisable comme rotor d'hélicoptère, et en particulier comme rotor arrière ou anti-couple, une application particulièrement avantageuse d'un tel rotor à entraînement homocinétique consiste en l'équipement d'aéronefs convertibles à rotors basculants, notamment du type connu et décrit dans FR 2 791 319, FR 2 791 634 et FR 2 798 359, auxquels on se reportera avantageusement pour davantage de précisions à ce sujet.

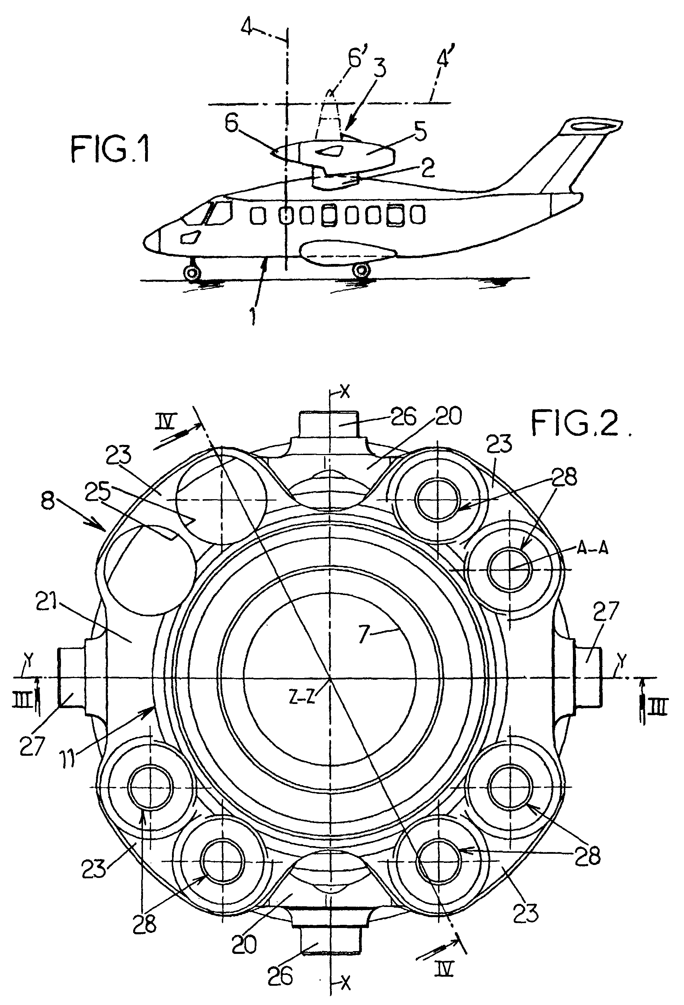

On se contente de rappeler qu'un tel aéronef convertible à rotors basculants comprend généralement, comme représenté schématiquement sur la figure 1, un fuselage 1, du type fuselage d'avion, supportant deux ailes fixes 2, par exemple des ailes hautes et surélevées par rapport au fuselage 1, chaque aile 2 supportant elle-même une nacelle motrice 3, logeant un groupe moteur entraînant en rotation un rotor 4, schématisé par le plan de rotation des pales du rotor, par l'intermédiaire d'une transmission (non visible sur la figure 1), dont un ensemble réducteur arrière est directement entraîné par le groupe moteur et logé comme ce dernier dans la partie arrière fixe 5 de la nacelle motrice 3, dont la partie avant 6, logeant le mât rotor et le moyeu, ainsi qu'un ensemble réducteur avant entraînant le mât rotor en rotation, est monté basculante avec le rotor 4, de sorte à pouvoir basculer d'une configuration avion, dans laquelle le rotor 4 se comporte comme une hélice à l'avant d'un fuseau moteur 5-6 dans le lit du vent relatif, à une configuration hélicoptère, dans laquelle le rotor 4' se comporte comme un rotor principal sustentateur d'hélicoptère à l'extrémité supérieure de la partie avant basculante de nacelle en position érigée 6' au-dessus de l'aile correspondante 2, cette dernière configuration étant utilisée pour les décollages et atterrissages de l'aéronef convertible, qui, après transition de la configuration hélicoptère vers la configuration avion, peut se déplacer en vol d'avancement comme un avion.

En variante, les nacelles 3 peuvent être totalement basculantes avec les rotors 4 par rapport aux ailes fixes 2.

Sur les rotors de giravion, il est connu que, depuis l'introduction de l'articulation de battement sur les rotors d'autogires et d'hélicoptères, le basculement du rotor en présence de conicité, que ce basculement soit souhaité et généré par le pilotage en pas cyclique ou subi du fait de la dissymétrie entre une pale avançante et une pale reculante, provoque, dans le plan d'entraînement des pales, des sollicitations qui ont tendance à faire accélérer et ralentir les pales au cours d'un tour du rotor. Ces modulations de vitesse sont provoquées par les forces de Coriolis, et peuvent être illustrées simplement par le fait que la trajectoire de l'extrémité des pales, vue dans un plan perpendiculaire à l'axe d'entraînement, est une ellipse excentrée, dont la vitesse angulaire de parcours est constante, et, en conséquence, dont la vitesse périphérique est modulée sur un tour. Ces accélérations et ralentissements des pales sur un tour de rotation ont un effet néfaste sur la durée de vie des composants du rotor, du fait que ces variations de vitesses génèrent des contraintes d'autant plus importantes que la rigidité des composants du rotor est élevée.

Réciproquement, il est connu qu'une grande souplesse autour de l'axe de traînée des pales a un effet très bénéfique sur les sollicitations dynamiques que subissent les pales et les composants du moyeu du rotor, et c'est la raison pour laquelle l'introduction de l'articulation de battement s'est accompagnée de l'introduction de l'articulation de traînée.

Ces perfectionnements aux concepts originaux de rotors de giravions ont abouti au rotor entièrement articulé en pas, battement et traînée, dont le principal inconvénient était d'être sujet à des instabilités de type résonance sol ou résonance air, qui ont nécessité le développement et l'utilisation d'amortisseurs de traînée, également dénommés adaptateurs de fréquence, ou encore contre-fiches de rappel élastique en traînée avec amortissement incorporé. Sur les rotors d'hélicoptère, ces amortisseurs de traînée sont disposés dans le plan de rotation du rotor, entre les pales et le moyeu du rotor dans un montage classique, ou entre des pales voisines du rotor, dans le montage dit interpale. Dans les deux cas, la présence des amortisseurs de traînée augmente la traînée aérodynamique du rotor, en particulier au niveau du moyeu et de la liaison du moyeu aux pales, ce qui réduit la performance globale de l'hélicoptère.

Sur un aéronef convertible, du type à rotors basculants présenté ci-dessus, dont la vitesse de déplacement, en mode avion, est bien plus élevée que celle d'un hélicoptère, et sur lequel les amortisseurs de traînée, montés comme sur un rotor d'hélicoptère, seraient dans le lit du vent, cette réduction de performance serait bien plus sensible, raison pour laquelle les concepteurs d'aéronefs convertibles de ce type se sont attachés à retenir, pour la définition des rotors, des moyeux extrêmement rigides en traînée (rotors dits « stiff-in-plane »), dépourvus d'amortisseurs de traînée, et dont la fréquence propre de traînée est supérieure à la fréquence de rotation nominale du rotor, ce qui supprime tout risque d'instabilité en traînée, même en l'absence d'amortisseurs de traînée.

Mais il est connu que les rotors rigides en traînée ont l'inconvénient majeur de générer des sollicitations très élevées lors des basculements des rotors. Sur les aéronefs convertibles, le souci de parvenir à des rotors de grande finesse aérodynamique, et donc sans amortisseurs de traînée, a conduit au développement de moyeux qui ne sont pas sensibles aux forces de Coriolis. Ces moyeux, parmi lesquels se trouvent les moyeux à entraînement par cardan, ont la particularité d'accompagner le basculement du rotor par le basculement de l'axe d'entraînement de ce dernier. De ce fait, l'axe d'entraînement du rotor est toujours perpendiculaire au plan du rotor, et la trajectoire décrite par les pales reste toujours un cercle dans un plan perpendiculaire à l'axe d'entraînement du rotor. Ce type d'entraînement a, par exemple, été utilisé sur des prototypes d'aéronefs convertibles, notamment celui dénommé XV15.

Mais une particularité connue des joints de cardan est de ne pas être homocinétiques, ce qui se manifeste par le fait que la vitesse de sortie de ces joints n'est pas toujours égale à la vitesse d'entrée. Cette distorsion de vitesse se produit lorsque les axes d'entraînement et de sortie ne sont pas colinéaires, c'est-à-dire, dans l'application considérée à l'entraînement en rotation d'un rotor, en présence de battements cycliques. Dans la configuration la plus simple d'un joint de cardan, ce dernier comporte un croisillon dont les articulations, par une branche du croisillon, sur un arbre menant et, par l'autre branche du croisillon, sur un arbre mené, permettent un rotulage de l'arbre mené ou de sortie relativement à l'arbre menant ou d'entrée. On sait que les modulations de vitesse apportées par un tel joint de cardan, et transmises à l'arbre mené, correspondent à des accélérations et décélérations qui, sur un tour de rotation du cardan, se manifestent deux fois. La vitesse de l'arbre mené n'est donc pas constante, mais modulée à une fréquence égale au double de la fréquence de rotation des arbres.

Pour supprimer ces modulations de vitesse, responsables de forces d'inertie très importantes, dans le cas d'un rotor de giravion, qui affectent globalement le moyeu et sont préjudiciables à la bonne tenue des ensembles mécaniques constitutifs du moyeu ou associés à ce dernier, plusieurs systèmes d'entraînement homocinétique ont été proposés, notamment les compas dits de Clemens, composés d'ensembles de deux branches articulées chacune respectivement aux arbres menant et mené et reliées par une rotule, ainsi que les joints tripodes, pour lesquels la transmission du mouvement est assurée au moyen de billes se déplaçant dans des gorges axiales usinées dans les arbres menant et mené.

Par ces modes de réalisation, on assure que le point d'entraînement se situe toujours dans le plan bissecteur des axes des arbres menant et mené. Comme les distances de ce point aux axes des deux arbres sont alors identiques, les vitesses de rotation des deux arbres sont rigoureusement égales, quelle que soit la position angulaire des deux arbres, ce qui garantit le caractère homocinétique de la transmission.

Ces deux systèmes d'entraînement homocinétique connus ne sont pas adaptés à une application sur des rotors d'aéronefs convertibles pour les raisons suivantes :
- l'installation de compas de Clemens sur un moyeu de rotor d'aéronef convertible augmente de manière très importante la traînée du moyeu, ce qui réduit ses performances et augmente son coût d'opération ;
- les joints tripodes ne conviennent pas notamment à cause des niveaux de couple élevés rencontrés sur les moyeux de rotors d'aéronefs convertibles, et qui nécessitent des billes de diamètre élevé, donc lourdes, pour maintenir les pressions de Hertz des surfaces de contact à des niveaux acceptables.

Dans d'autres modes de réalisation, comme, par example, dans celui décrit dans la demande de brevet EP-1088755, qui est considéré comme l'état de la technique le plus proche, les fonctions rotulage et entraînement sont découplées. Ceci est le cas dans le système d'entraînement homocinétique de l'aéronef convertible à rotors basculants dénommé « V22 », dans lequel la fonction de rotulage est réalisée par deux demi-butées lamifiées sphériques de battement enveloppant le moyeu et reliées au mât rotor. Cette fonction permet la reprise de la portance et de l'effort coplanaire provenant des excitations aérodynamiques et inertielles du rotor. L'entraînement du moyeu par le mât (transmission du couple) est assuré par trois biellettes reliées chacune, par une extrémité, au moyeu, et, par l'autre extrémité, au mât.

Une variante de ce système est proposée dans le brevet US-5,145,321, dans lequel la fonction d'entraînement est assurée par des paliers rotulés sensiblement parallélépipédiques.

Ces moyens distincts assurant les fonctions de rotulage et d'entraînement du moyeu par rapport au mât rotor ont pour particularité d'être cinématiquement non compatibles en l'absence de souplesse des éléments de liaison du moyeu au mât, et de n'être homocinétiques que grâce à un calibrage précis des rigidités des éléments de liaison des moyens d'entraînement. En présence d'un battement cyclique du rotor, chaque biellette d'entraînement précitée subit une sollicitation dynamique à une fréquence égale à deux fois la fréquence de rotation du rotor, et dont la phase dépend de la position de cette biellette par rapport au moyeu. Pour des biellettes régulièrement espacées, en direction circonférentielle autour de l'axe de rotation, le déphasage des sollicitations dynamiques des biellettes est tel que les contributions au couple dynamique s'annulent, ce qui est une condition nécessaire et suffisante pour un entraînement homocinétique du moyeu par le mât rotor.

Un autre inconvénient majeur de ce type de moyeu, qui s'ajoute à ceux portant sur la nécessité d'une souplesse des éléments de liaison et du calibrage précis des rigidités des biellettes d'entraînement, est que la disposition enveloppante des demi-butées de battement rend l'inspection des biellettes notamment, et du système de transmission de couple en général, délicate, et difficile l'accessibilité à ces moyens pour leur maintenance.

Dans le brevet US-5,145,321 précité, le cisaillement vertical d'un palier rotulé sensiblement parallélépipédique permet le basculement du rotor autour d'un axe perpendiculaire à l'axe joignant le centre du palier à l'axe d'entraînement du rotor. Le mouvement du rotor autour d'un deuxième axe de basculement est permis grâce à l'articulation à rotule présente à l'intérieur du palier parallélépipédique. De même que pour un système d'entraînement du moyeu par le mât par l'intermédiaire de biellettes, comme présenté ci-dessus, un nombre minimum de trois paliers aux rigidités très voisines est nécessaire pour que l'entraînement soit homocinétique. La souplesse nécessaire au bon fonctionnement est également dirigée selon la direction d'entraînement en rotation.

Le problème à la base de l'invention est de proposer un rotor de giravion à entraînement homocinétique, en particulier pour un aéronef convertible à au moins un rotor basculant, dont l'ensemble des moyens d'entraînement homocinétique et des moyens de basculement possède les degrés de liberté suivants :
- deux degrés de liberté en rotation autour de deux axes coplanaires, sécants, pour le basculement du moyeu, et donc du rotor,
- aucun degré de liberté en translation,
ce qui équivaut, en terme d'efforts à :
- un passage des efforts c'est-à-dire la portance et les efforts coplanaires suivant les deux axes considérés ci-dessus et suivant l'axe autour duquel s'effectue l'entraînement en rotation, et
- un passage des moments autour de l'axe de rotation du mât rotor seulement, ce qui correspond au couple d'entraînement du moyeu, la capacité de rotulage de ces moyens n'étant donc que partielle, puisqu'ils n'offrent pas de liberté de rotation de ces moyens autour du mât, le rotor de l'invention remédiant aux inconvénients des rotors de ce type de l'état de la technique, et tels que présentés ci-dessus, et en particulier ne nécessitant pas la présence d'éléments lamifiés de liaison réalisés avec un calibrage précis des rigidités pour avoir un entraînement homocinétique, tout en rendant les moyens de rotulage et d'entraînement cinématiquement compatibles, que ces moyens soient distincts ou confondus, et même en l'absence d'une souplesse spécifique procurée par des éléments de liaison lamifiés.

A cet effet, l'invention propose un rotor de giravion à entraînement homocinétique, du type connu et comprenant :
- un mât rotor, apte à être entraîné en rotation autour de son axe longitudinal,
- un moyeu, relié audit mât par des moyens d'entraînement homocinétique et par des moyens de basculement, permettant un pivotement d'ensemble du moyeu autour de tout axe de battement concourant avec l'axe du mât et perpendiculaire audit axe du mât, de sorte que ledit moyeu est apte à être entraîné en rotation homocinétique par ledit mât, autour d'un axe géométrique de rotation du moyeu pouvant être incliné dans toute direction autour de l'axe du mât, et
- au moins deux pales, reliées chacune audit moyeu par des moyens de retenue et d'articulation en pas de la pale correspondante, et qui se caractérise en ce que lesdits moyens d'entraînement homocinétique comprennent un mécanisme différentiel de partage du couple statique et autorisant un mouvement relatif, dans un plan perpendiculaire audit axe du mât, entre au moins deux organes d'entraînement du moyeu, ledit mécanisme différentiel comprenant un ensemble de trois disques sensiblement superposés et sensiblement coaxiaux autour dudit axe du mât, et dont un premier disque, disposé entre les deux autres selon ledit axe du mât, est un disque menant, solidaire en rotation dudit mât, et relié à chacun des deux autres disques, qui sont menés, par au moins un axe de liaison, sensiblement parallèle audit axe du mât, et articulé sur chacun des trois disques par l'une respectivement de trois liaisons rotulées sensiblement centrées sur l'axe géométrique longitudinal dudit axe de liaison, chacun des deux disques menés étant relié au moyeu par l'un au moins desdits organes d'entraînement, qui sont chacun également articulé au moyeu, de sorte à l'entraîner en rotation autour dudit axe géométrique de rotation du moyeu.

Selon un premier mode de réalisation, un premier des disques menés entraîne en rotation, autour dudit axe du mât, et de préférence par l'intermédiaire de deux doigts d'entraînement coaxiaux autour d'un premier axe diamétral dudit mât, un premier organe d'entraînement agencé en premier balancier, monté pivotant autour dudit premier axe diamétral, qui est sensiblement perpendiculaire audit axe du mât, par deux premiers paliers diamétralement opposés par rapport audit axe du mât, le second disque mené entraînant en rotation, autour dudit axe du mât, et de préférence également par l'intermédiaire de deux doigts d'entraînement coaxiaux autour d'un second axe diamétral du mât, un second organe d'entraînement, agencé en second balancier, monté pivotant autour dudit second axe diamétral, qui est sensiblement perpendiculaire audit axe du mât et audit premier axe diamétral, et concourant avec ce dernier sur ledit axe du mât, par deux seconds paliers diamétralement opposés par rapport audit axe du mât, ledit premier balancier étant de plus articulé sur le moyeu par deux premières liaisons rotulées, diamétralement opposées par rapport audit axe du mât, et centrées chacune sensiblement dans un plan défini par ledit axe du mât et ledit second axe diamétral, et ledit second balancier étant de plus articulé sur ledit moyeu par deux secondes liaisons rotulées, diamétralement opposées par rapport audit axe du mât et centrées chacune sensiblement dans un plan défini par ledit axe du mât et ledit premier axe diamétral, de sorte que les balanciers, leurs paliers de pivotement sur les disques menés et leurs liaisons rotulées d'articulation sur le moyeu constituent des moyens de basculement d'ensemble du moyeu qui appartiennent aux moyens d'entraînement homocinétique du moyeu par le mât.

Dans cette réalisation, le rotor selon l'invention comporte des moyens d'entraînement et d'articulation du moyeu par et par rapport au mât qui sont basés sur un joint de cardan dont les deux articulations successives seraient combinées au même niveau entre la pièce menante, le mât rotor, et la pièce menée, le moyeu, de sorte que ce dispositif a l'avantage de réaliser à la fois les deux fonctions de rotulage et de transmission du couple à l'aide d'un nombre réduit de pièces, ce qui le rend intéressant sur les plans de la masse, du coût, et de la maintenance.

L'avantage principal d'un tel rotor selon l'invention, avec son mécanisme différentiel à trois disques, par rapport à un rotor analogue qui serait dépourvu d'un tel mécanisme, est qu'il procure le caractère homocinétique aux moyens d'entraînement, sans qu'il soit nécessaire de définir des éléments de liaison présentant des souplesses spécifiques et sensiblement la même rigidité de torsion dans les deux chaînes de transmission de couple reliant le mât au moyeu, et passant chacune par l'un respectivement des balanciers.

En effet, afin que les moyens de rotulage et les moyens de basculement soient cinématiquement compatibles, il est nécessaire que les deux balanciers puissent effectuer de petits débattements angulaires relatifs autour de l'axe géométrique de rotation du moyeu. Ceci résulte de ce qu'en cas de basculement du moyeu par rapport au mât et autour d'un axe non confondu avec les axes de pivotement des balanciers, le basculement des balanciers provoque, en l'absence de souplesse entre les deux chaînes de transmission du couple, des rotations des balanciers de sens opposés autour de l'axe d'entraînement du rotor. Le basculement de l'un des balanciers a tendance à faire avancer le moyeu, dans le sens de rotation du rotor, alors que le basculement de l'autre balancier a tendance à faire reculer le moyeu (rotation dans le sens contraire au sens de rotation du rotor). Pour sortir de cet état hyperstatique, un degré de liberté supplémentaire est introduit selon l'axe d'entraînement, et ceci est précisément obtenu grâce au mécanisme différentiel à trois disques, permettant un partage du couple statique transmis du mât aux deux balanciers et un mouvement relatif des deux balanciers. En effet, tout basculement du rotor et de son moyeu sur le mât induit une rotation relative cyclique des deux balanciers à la fréquence 2 Ω, qui est compensée cinématiquement par les axes de liaison articulés sur les trois disques, et permettant des rotations en sens opposés des disques menés par rapport au disque menant, et autour de l'axe du mât.

La présence de ce mécanisme différentiel permet de ne plus avoir à utiliser, au niveau des paliers et liaisons rotulées des balanciers, des éléments de liaisons lamifiés, à raideurs calibrées. Toutefois, il est avantageux que les paliers de pivotement des balanciers sur les disques menés et/ou que les liaisons rotulées d'articulation des balanciers sur le moyeu comprennent des éléments lamifiés cylindriques, sphériques ou tronconiques, ou une combinaison de tels éléments dans un but de réduction des frottements induits par la cinématique des deux balanciers et ainsi d'augmentation de la durée de vie des composants.

Selon un second mode de réalisation, chacun des disques menés entraîne en rotation autour dudit axe du mât, et par l'intermédiaire de deux doigts d'entraînement, deux organes d'entraînement agencés en biellettes, diamétralement opposées et orientées sensiblement tangentiellement par rapport audit axe du mât, les biellettes d'entraînement étant régulièrement disposées autour dudit axe du mât, de sorte que chacune des deux biellettes entraînées par l'un des disques menés est entre les deux biellettes entraînées par l'autre disque mené, chaque biellette d'entraînement étant articulée, par l'une de ses extrémités, sur l'un respectivement des deux doigts d'entraînement de l'un respectivement des disques menés, et, par son autre extrémité, sur un embout de fixation au moyeu.

L'avantage d'un tel rotor avec mécanisme différentiel relié aux biellettes assurant une fonction d'entraînement découplée de la fonction de rotulage, par rapport aux rotors de même nature sans mécanisme différentiel, est que le caractère homocinétique de l'entraînement n'est pas obtenu par la génération d'efforts importants déphasés qui, en s'ajoutant s'annulent, mais grâce à la compatibilité cinématique introduite par le mécanisme différentiel. Un calibrage précis des raideurs des biellettes n'est pas nécessaire, ce qui simplifie grandement la définition de ces dernières.

Toutefois, chaque biellette d'entraînement reste avantageusement équipée, à chacune de ses deux extrémités, d'une liaison rotulée, comportant de préférence une rotule lamifiée, pour l'articulation d'une extrémité de ladite biellette sur un doigt d'entraînement d'un disque mené, et l'articulation de l'autre extrémité de ladite biellette sur un embout de fixation au moyeu, afin de soulager les biellettes de toute sollicitation superflue dans leurs débattements angulaires par rapport aux disques menés, d'une part, et au moyeu, d'autre part, lorsque ce dernier est basculé.

Dans ce second mode de réalisation, la fonction de rotulage, découplée de la fonction d'entraînement, peut être remplie de manière en soi connue, par au moins une demi-butée sphérique lamifiée centrale, de battement, et de préférence par deux demi-butées de ce type qui enveloppent la partie centrale du moyeu et les moyens d'entraînement, chaque demi-butée ayant au moins une armature liée au moyeu et au moins une armature solidaire en rotation du mât.

La butée sphérique de battement ainsi constituée passe dans le mât rotor la portance et les efforts coplanaires s'exerçant sur le rotor.

Mais même dans le premier mode de réalisation, à double balancier associé à un mécanisme différentiel, afin d'améliorer la rigidité du rotor en battement cyclique, le moyeu peut être également et avantageusement relié au mât par au moins un moyen de rappel élastique du moyeu dans une position de repos sensiblement perpendiculaire à l'axe du mât, et d'une manière connue en soi, ce moyen de rappel élastique peut comprendre, avantageusement, au moins une demi-butée sphérique lamifiée centrale, dont une armature au moins est liée au moyeu et au moins une armature est solidaire en rotation du mât. Cette demi-butée sphérique peut être montée sous la partie centrale du moyeu, les moyens d'entraînement homocinétique et les moyens de basculement, et, si de plus le moyen de rappel élastique comprend également une demi-butée sphérique lamifiée centrale supérieure, qui recouvre et enveloppe la partie centrale du moyeu, on obtient alors une butée sphérique lamifiée centrale qui contribue à passer dans le mât rotor la portance et les efforts coplanaires s'exerçant sur le rotor.

Dans les différents modes de réalisation, pour une bonne répartition des efforts de liaison du disque menant aux deux disques menés afin d'assurer une bonne compensation cinématique, il est avantageux que le mécanisme différentiel comprenne au moins deux axes de liaison des trois disques, lesdits axes de liaison étant régulièrement disposés en direction circonférentielle autour dudit axe du mât, et, plus particulièrement au moins deux ensembles d'au moins deux axes de liaison voisins par ensemble, lesdits ensembles d'axes de liaison étant régulièrement répartis en direction circonférentielle autour dudit axe du mât. Pour faciliter les rotations de sens opposés et d'amplitude limitée des disques menés par rapport au disque menant et au mât, chaque axe de liaison est avantageusement articulé dans le disque menant par une liaison rotulée centrale de plus grand diamètre que le diamètre commun à deux liaisons rotulées d'extrémité dudit axe de liaison, et par chacune desquelles ledit axe de liaison est articulé dans l'un respectivement des deux disques menés. Selon une structure simple, chaque axe de liaison est avantageusement un axe à triple rotule.

Pour améliorer leur résistance, ces axes de liaison, sollicités par le couple, peuvent être lamifiés, et présentent avantageusement une certaine souplesse selon leur axe géométrique longitudinal, afin de permettre un partage homogène des efforts transitant par chaque axe de liaison, mais cette souplesse n'est pas critique pour le caractère homocinétique de la transmission. Elle est aussi nécessaire en direction radiale, par rapport à l'axe du mât, pour des raisons cinématiques. A cet effet, chacune des trois liaisons rotulées de chaque axe de liaison est de préférence lamifiée et comprend également un palier lamifié cylindrique, sensiblement coaxial audit axe de liaison.

Pour la transmission de l'effort de portance et des efforts coplanaires du moyeu au mât, chaque disque mené est avantageusement monté axialement entre deux paliers annulaires radiaux, entourant ledit mât et sensiblement coaxiaux autour dudit axe du mât, et permettant une rotation, autour dudit axe du mât, de chacun desdits disques menés par rapport audit mât et au disque menant, et, en outre, au moins une bague axiale est de préférence montée entre une partie périphérique et axialement décalée de chaque disque mené et le disque menant, afin de permettre une rotation relative, autour dudit axe du mât, des disques menés par rapport au disque menant et audit mât.

Ces paliers annulaires radiaux et/ou bagues axiales peuvent être lisses, mais avantageusement comportent des éléments lamifiés cylindriques, et/ou tronconiques, et/ou sphériques.

De manière simple, pour la transmission du couple, le disque menant est solidaire en rotation dudit mât par des cannelures axiales internes en prise avec des cannelures axiales externes sur une partie d'extrémité dudit mât, axialement du côté opposé à la base dudit mât, par laquelle ce dernier est entraîné en rotation.

De plus, un premier des deux disques menés peut être disposé axialement entre le disque menant et un épaulement radial externe solidaire en rotation dudit mât, tandis que le deuxième disque mené est disposé axialement entre le disque menant et un dispositif de précharge axiale de l'ensemble des trois disques, et monté sur l'extrémité libre dudit mât.

Dans les différents modes de réalisation, il est avantageusement simple que chaque disque mené supporte deux doigts d'entraînement diamétralement opposés par rapport audit axe du mât, et par lesquels le disque mené correspondant est relié à l'un au moins desdits organes d'entraînement, les doigts d'entraînement des deux disques menés s'étendant sensiblement dans un même plan perpendiculaire à l'axe dudit mât.

Afin que le moyeu puisse avantageusement être rigide dans son plan, et que l'ensemble des moyens d'entraînement homocinétique, et, éventuellement, des moyens de basculement soit convenablement protégé, les organes d'entraînement en rotation du moyeu à partir des disques menés sont avantageusement reliés à un carter de moyeu, qui entoure lesdits organes d'entraînement et ledit ensemble de trois disques, et est fixé à un plateau de moyeu relié aux pales et présentant une ouverture centrale de passage dudit mât. Le plateau de moyeu peut alors être un plateau de type connu, en matériau composite, et en forme d'étoile à bras élancés en nombre égal au nombre des pales et sur chacun desquels sont montés les moyens de retenue et d'articulation en pas d'une pale, cette disposition permettant d'obtenir une bonne rigidité en traînée et une certaine souplesse selon l'axe de battement.

D'autres caractéristiques et avantages de l'invention ressortiront de la description donnée ci-dessous, à titre non limitatif, d'exemples de réalisation décrits en référence aux dessins annexés sur lesquels :
- la figure 1 représente schématiquement, en élévation latérale, un aéronef convertible à rotors basculants destinés à être équipés de rotors à entraînement homocinétique selon l'invention,
- la figure 2 est une vue schématique en plan d'un mécanisme différentiel pour moyens d'entraînement homocinétique d'un rotor selon l'invention,
- les figures 3 et 4 sont des vues schématiques en coupe axiale du mécanisme différentiel de la figure 2 respectivement selon III-III et IV-IV,
- la figure 5 est une vue en perspective éclatée du mécanisme différentiel des figures 2 à 4 tel qu'il se monte sur un mât rotor,
- la figure 6 est la vue en perspective correspondante du mécanisme différentiel de la figure 5 monté sur le mât,
- la figure 7 est une vue en perspective éclatée analogue à la figure 5, et représentant le montage du mécanisme différentiel dans un ensemble à deux balanciers constituant simultanément les moyens d'entraînement et les moyens de basculement d'un moyeu de rotor, non représenté sur la figure 7, mais analogues à ceux de la figure 9,
- la figure 8, est une vue en perspective correspondante, qui représente le mécanisme différentiel et l'ensemble à double balancier monté l'un sur l'autre,
- la figure 9 est une vue schématique en partie en plan et en partie en coupe transversale d'un second mode de réalisation, dans lequel un mécanisme différentiel entraîne un moyeu de rotor tripale par l'intermédiaire de biellettes, et
- la figure 10 est une vue schématique en coupe axiale du moyeu de rotor tripale de la figure 9 avec ses moyens de basculement agencés en demi-butée centrale de battement.

Les figures 2 à 6 représentent un mécanisme différentiel de partage du couple, monté sur un mât rotor, pour l'entraînement en rotation du moyeu d'un rotor basculant d'aéronef convertible, tel que décrit ci-dessus en référence à la figure 1.

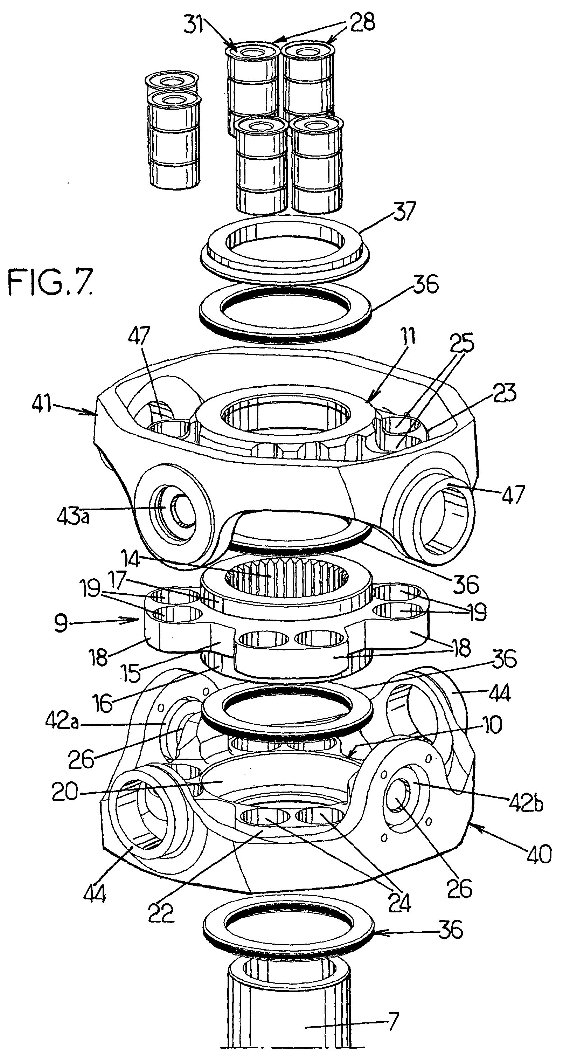

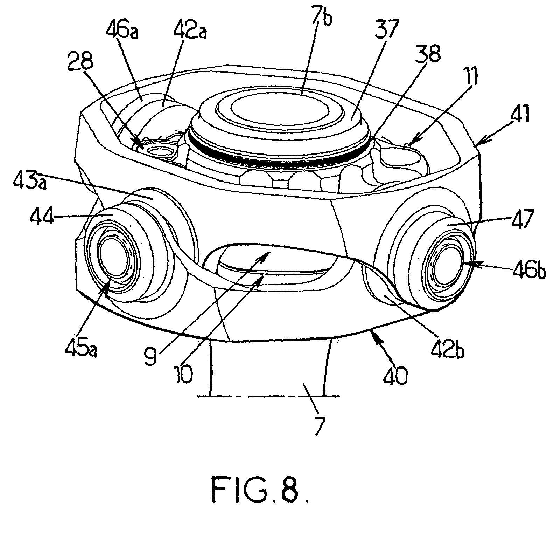

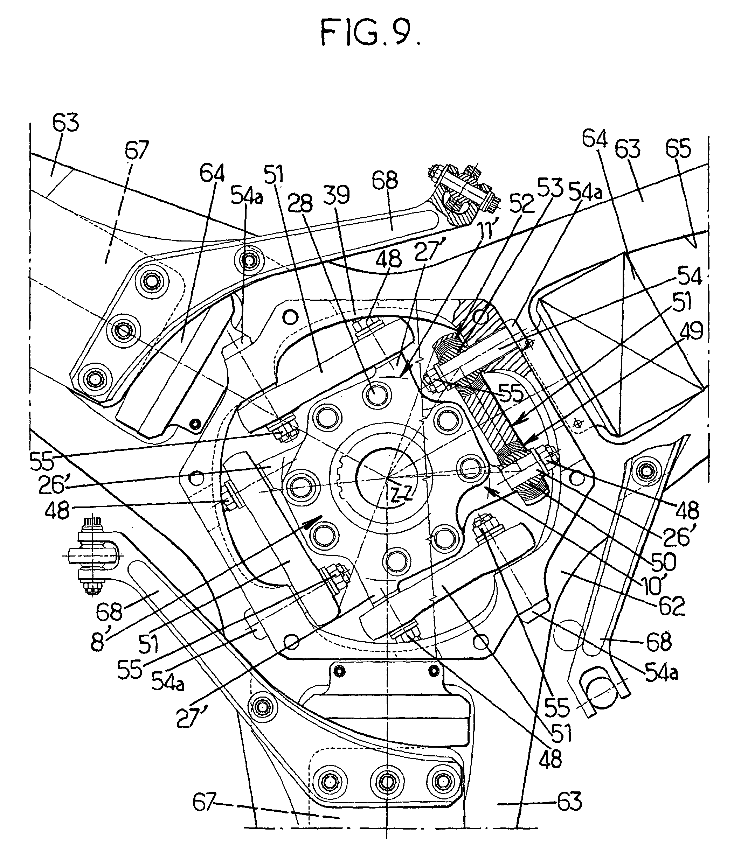

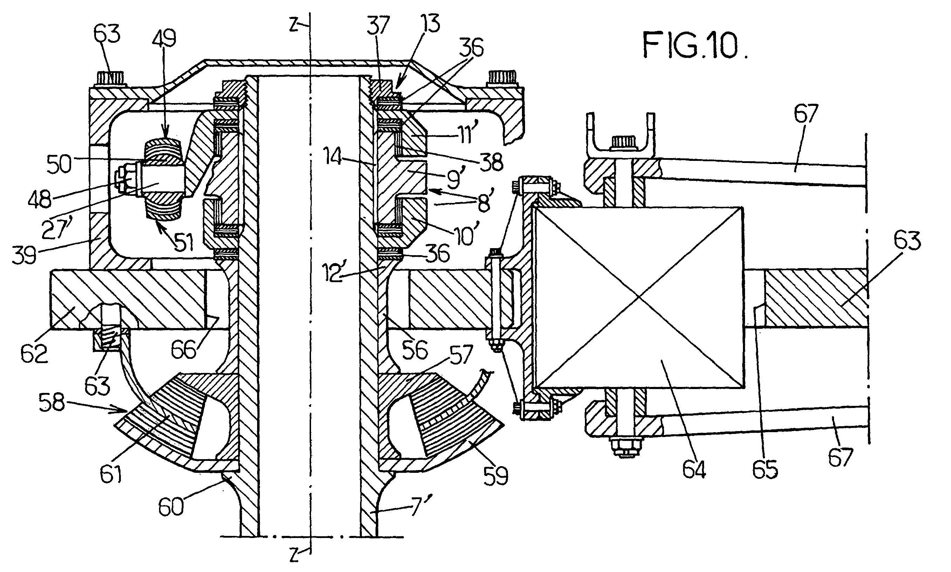

Dans un premier mode de réalisation, ce mécanisme différentiel peut être associé à un dispositif à deux balanciers, comme représenté sur les figures 7 et 8, pour l'entraînement en rotation et le basculement d'un moyeu de rotor, qui peut être tel que représenté sur les figures 9 et 10, sur lesquelles le mécanisme différentiel assure, selon un second mode de réalisation, l'entraînement en rotation du moyeu par l'intermédiaire de biellettes d'entraînement, les moyens de basculement comprenant une demi-butée de battement comme représenté sur la figure 10.

Sur les figures 2 à 6, le mât 7 du rotor, entraîné par sa base (non représentée) en rotation autour de son axe longitudinal Z-Z, supporte, par sa partie d'extrémité libre (du côté opposé à la base) un mécanisme différentiel, désigné dans son ensemble en 8. Ce mécanisme 8, qui appartient aux moyens d'entraînement homocinétique du moyeu du rotor, comprend essentiellement un ensemble de trois disques coaxiaux autour de l'axe Z-Z et superposés selon cet axe, dont un disque central 9 est axialement disposé entre les deux autres disques 10 et 11, dont l'un, disposé axialement entre le disque central 9 et un épaulement d'appui 12, annulaire, périphérique et en saillie radiale vers l'extérieur sur l'arbre 7, est un disque dit interne 10, car disposé selon l'axe Z-Z du côté de la base de l'arbre 7, et donc vers l'intérieur de la structure de l'aéronef convertible, tandis que le troisième disque 11, dit disque externe, est disposé axialement entre le disque central 9 et un dispositif de précharge axiale 13, monté sur l'extrémité libre d'un arbre 7, pour assurer un empilement axial (selon Z-Z) des trois disques 9, 10 et 11 de l'ensemble avec une précharge, dans des conditions et pour des raisons qui sont expliquées ci-dessous.

Le disque central 9 est solidaire en rotation du mât 7 par des cannelures axiales internes 14 de son alésage central, qui sont en prise avec des cannelures axiales externes sur une partie d'extrémité cylindrique 7a du mât 7, pour la transmission du couple. Comme visible également sur la figure 7, le disque central 9 présente une partie centrale 15, entre deux portées cylindriques d'extrémités axiales 16 et 17, et qui se prolongent radialement vers l'extérieur par quatre croisillons 18 percés chacun de deux alésages cylindriques 19 côte-à-côte et d'axes parallèles. Les quatre croisillons 18 sont diamétralement opposés deux-à-deux, et régulièrement répartis sur la périphérie de la partie centrale 15 du disque central 9.

Chacun des disques interne 10 et externe 11 comporte une partie périphérique respectivement 20 et 21, qui est axialement décalée vers la partie centrale 15 du disque central 9 en entourant la portée axiale interne 16 (inférieure sur les figures) ou respectivement axiale externe 17 (supérieure sur les figures) de ce dernier, et chacune des parties périphériques 20 et 21 respectivement du disque interne 10 et du disque externe 11 présente également, en saillie radialement vers l'extérieur, quatre croisillons respectivement 22 et 23, également diamétralement opposés deux-à-deux et régulièrement répartis sur la périphérie desdites parties périphériques 20 et 21, et chacun également percé de deux alésages respectivement 24 et 25 côte-à-côte et d'axes parallèles, et de même diamètre que les alésages 19 du disque central 9.

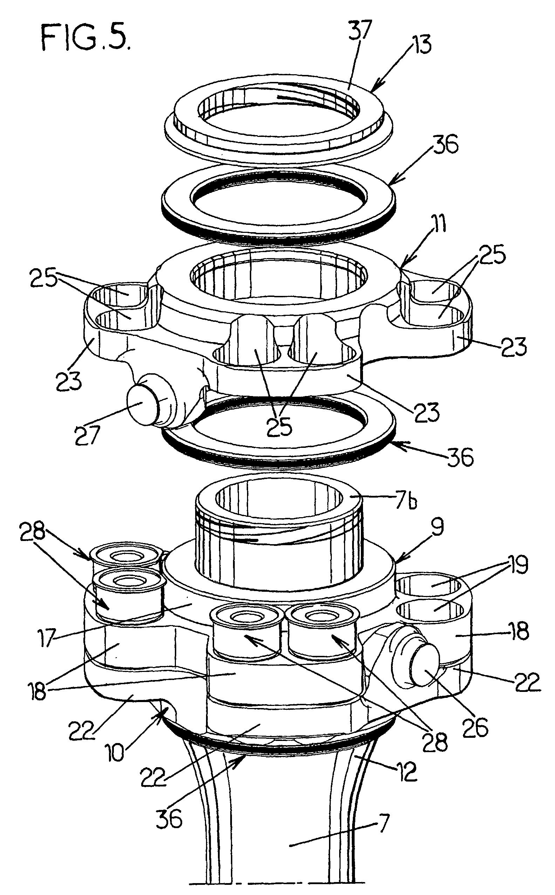

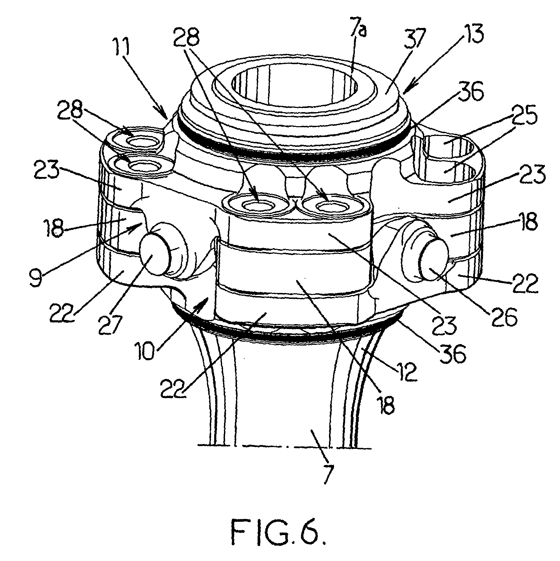

De plus, le disque interne 10 supporte deux doigts d'entraînement 26, de forme générale cylindrique de section circulaire, d'axes contenus dans un plan radial (par rapport à l'axe Z-Z), et qui sont en saillie vers l'extérieur du disque interne et occupent des positions diamétralement opposées, en étant chacun entre deux croisillons 22 de ce disque 10, et simultanément décalés axialement vers la partie centrale 15 du disque central 9, de sorte à pouvoir se loger dans l'une des échancrures délimitées, à la périphérie de cette partie centrale 15 du disque central 9, entre deux croisillons 18 de ce disque 9 (voir figures 5 et 6). De manière analogue, le disque externe 11 présente deux doigts d'entraînement 27, de même forme cylindrique de section circulaire et de même taille que les doigts 26 et également diamétralement opposés et en saillie vers l'extérieur de la partie périphérique 21 de ce disque 11, en étant simultanément décalés axialement vers la partie centrale 15 du disque central 9, de sorte à pouvoir chacun se loger dans l'une des quatre échancrures délimitées par les croisillons 18 sur la périphérie du disque central 9, et en alternance, en direction circonférentielle autour de l'axe commun à ces trois disques 9, 10 et 11, avec les doigts d'entraînement 26 du disque interne 10.

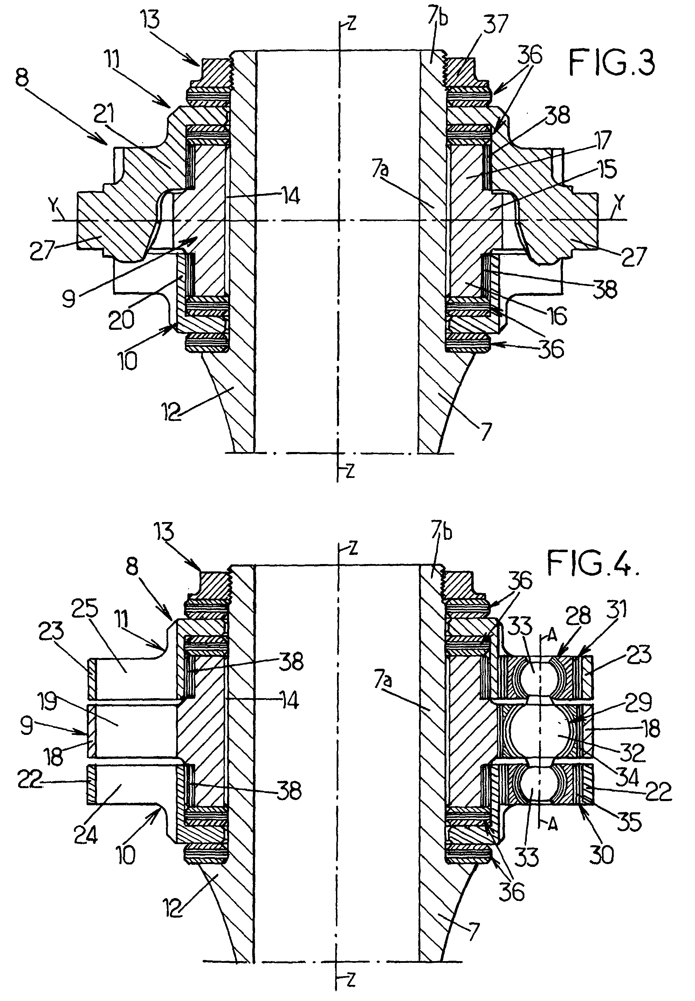

Les trois disques 9, 10 et 11 sont axialement superposés de sorte qu'au repos les croisillons 18, 22 et 23 soient à l'aplomb les uns au-dessus des autres, et les alésages 19, 24 et 25 alignés d'un disque à l'autre, comme représenté sur la demi-vue de gauche de la figure 4, de sorte que, dans chacun des huit groupes de trois alésages 19, 24 et 25 ainsi alignés, peut être logé l'un respectivement de huit axes de liaison 28, ainsi répartis, sur la périphérie des trois disques, en quatre ensembles de deux axes de liaison 28 voisins, radialement à la même distance de l'axe Z-Z du mât 7, et régulièrement répartis en quatre paires d'axes de liaisons 28, diamétralement opposées deux-à-deux et selon deux plans diamétraux perpendiculaires l'un à l'autre, comme visible sur la figure 2.

Chaque axe de liaison 28 a son axe géométrique longitudinal A-A sensiblement parallèle à l'axe Z-Z du mât 7, et est articulé dans chacun des trois croisillons 18, 22 et 25 correspondants par l'une respectivement de trois liaisons rotulées 29, 30 et 31 qui sont centrées sur l'axe A-A. Comme représenté sur la demi-vue de droite de la figure 4, chaque axe de liaison 28 est un axe à triple rotules, avec une rotule centrale 32 de plus grand diamètre que celui des deux rotules d'extrémité 33, de même diamètre, chacune des rotules 32 et 33 étant une rotule lamifiée retenue radialement (par rapport à l'axe A-A) à l'intérieur d'un palier lamifié cylindrique 34 (pour la liaison rotulée centrale 29) et 35 (pour chacune des liaisons rotulées d'extrémité 30 et 31), les paliers lamifiés cylindriques 34 et 35 étant sensiblement coaxiaux autour de l'axe géométrique A-A de l'axe de liaison 28 correspondant. Pour cette raison, chaque axe de liaison 28 se présente, vu de l'extérieur, comme une douille cylindrique subdivisée axialement en trois parties superposées et légèrement espacées l'une de l'autre, avec une collerette radiale à l'extrémité supérieure (voir la figure 7) et renfermant chacune les trois liaisons rotulées 29, 30 et 31 décalées selon l'axe A-A.

Après mise en place des huit axes de liaison 28, le disque central 9, solidaire en rotation de l'arbre 7, est un disque menant pour les disques interne 10 et externe 11, qui sont des disques menés du mécanisme 8, et dont chacun peut entraîner en rotation, autour de l'axe Z-Z, et par ses deux doigts d'entraînement 26 ou 27 correspondants, l'un au moins d'organes d'entraînement reliés au moyeu pour faire tourner ce dernier, qui sont chacun articulés au moyeu, de sorte à entraîner ce dernier en rotation, à partir de la rotation du mât 7.

Pour des raisons expliquées ci-après, afin de permettre une rotation relative, autour de l'axe Z-Z de rotation du mât 7, entre chacun des disques menés 10 et 11, d'une part, et, d'autre part, le disque menant 9 et le mât 7, chacun des disques menés 10 et 11 est monté, dans sa partie qui entoure le mât 7, axialement entre deux paliers annulaires radiaux 36, entourant le mât 7 et sensiblement coaxiaux autour de l'axe Z-Z de ce dernier. Ainsi, la partie centrale du disque mené 10 est montée entre un palier radial 36 interne, en appui contre l'épaulement 12 du mât 7, et un palier radiale 36 externe en appui contre l'extrémité axiale interne de la portée 16 du disque menant 9, tandis que la partie centrale de l'autre disque mené 11 est montée entre un palier radial 36 interne, en appui contre la face d'extrémité externe de la portée 17 du disque menant 9, et un autre palier radial externe 36 sollicité axialement, dans le sens qui précharge axialement l'empilement des trois disques 9, 10 et 11 et des quatre paliers 36, par le dispositif de précharge axiale 13, qui, sur ces figures, est schématiquement représenté comme étant constitué d'un écrou 37 vissé autour de l'extrémité libre 7b extérieurement filetée de l'arbre 7.

En pratique, ce dispositif de précharge axiale 13 est avantageusement réalisé comme ceux qui équipent les têtes de rotors principaux d'hélicoptères, c'est-à-dire que l'écrou 37 n'est pas directement en appui contre le palier externe 36, mais est axialement traversé par une couronne de vis de serrage, régulièrement réparties sur la périphérie de l'écrou 37, et dont les extrémités sont en appui contre une entretoise, sollicitée élastiquement en compression, et elle-même en appui contre la face externe (supérieure sur les figures 3 à 6) du palier 36 externe. Un tel dispositif de précharge axiale à entretoise comprimée axialement et élastiquement, est utilisé sur un rotor d'aéronef convertible pour la même raison que sur un rotor principal d'hélicoptère, à savoir pour éviter des décollements de portance, puisque cette dernière ainsi que les efforts coplanaires dans le rotor sont transmis, dans le mode de relation décrit ci-dessous en référence aux figures 7 et 8, par les disques menés 10 et 11 au disque menant 9 et au mât 7.

En plus des paliers annulaires radiaux 36, qui peuvent être lisses mais sont de préférence chacun un palier lamifié cylindrique, comme représenté, ou éventuellement tronconique, comprenant au moins une rondelle d'élastomère vulcanisé entre deux rondelles métalliques, deux bagues axiales 38 sont prévues pour faciliter les rotations relatives entre chacun des disques menés 10 et 11, d'une part, et, d'autre part, le mât 7 et le disque menant 9. L'une des deux bagues 38 est montée entre la partie périphérique 20 du disque mené 10 et la portée 16 du disque menant 9, tandis que l'autre bague axiale 38 est montée entre la partie périphérique 21 de l'autre disque mené 11 et l'autre portée 17 du disque menant 9. Ces deux bagues axiales 38 sont également sensiblement coaxiales autour de l'axe Z-Z du mât 7 et, ou, de préférence, lamifiées et constituées chacune d'au moins un élément lamifié cylindrique à au moins une couche mince et cylindrique d'élastomère entre deux armatures annulaires rigides. En variante, les bagues axiales 38 peuvent également comprendre des éléments lamifiés tronconiques ou sphériques sensiblement coaxiaux autour de l'axe Z-Z.

Dans l'exemple des figures 2 à 6, le mécanisme différentiel 8 est tel que les deux doigts d'entraînement 26 du disque mené 10 sont non seulement diamétralement opposés par rapport à l'axe Z-Z, mais en saillie radiale vers l'extérieur du disque mené 10, perpendiculairement à l'axe Z-Z, et coaxiaux autour d'un premier axe diamétral X-X du mécanisme 8 et du mât 7, de sorte que les doigts 26 constituent un premier bras d'entraînement diamétral solidaire du disque mené 10. De même, les deux doigts d'entraînement 27 du disque mené 11, également diamétralement opposés par rapport à l'axe Z-Z et perpendiculaires à ce dernier, en porte-à-faux et en saillie radialement vers l'extérieur du disque mené 11, et coaxiaux autour d'un second axe diamétral Y-Y du mécanisme 8 et qui est, au repos, perpendiculaire au premier axe diamétral X-X et concourant avec ce dernier sur l'axe Z-Z, constituent un deuxième bras d'entraînement diamétral, solidaire en rotation du disque mené 11 et, lorsque le mécanisme 8 est au repos, perpendiculaire au premier bras d'entraînement diamétral formé par les doigts 26.

Ce mécanisme différentiel 8 est compatible avec un dispositif à double balancier, comme représenté sur les figures 7 et 8, pour un rotor dans lequel ce dispositif à double balancier constitue à la fois les moyens d'entraînement et les moyens de basculement interposés entre le mécanisme différentiel 8, d'une part, et, d'autre part, un moyeu de rotor, supportant des pales, et qui est ainsi monté basculant autour de tout axe de battement coupant l'axe Z-Z du mât 7 et d'azimut quelconque autour de cet axe Z-Z, de sorte que le moyeu, et donc le rotor, peut être entraîné en rotation autour d'un axe géométrique incliné dans toute direction autour de l'axe Z-Z du mât 7.

Sur les figures 7 et 8, le dispositif à double balancier comprend un premier balancier 40, sensiblement en forme d'octogone (vu en plan) monté pivotant par rapport au mât 7 autour du premier axe diamétral X-X par deux premiers paliers 42a, 42b, qui peuvent être des paliers cylindriques lisses ou, de préférence, des paliers constitués d'éléments lamifiés cylindriques, coniques, et/ou éventuellement sphériques, montés tourillonnants sur les doigts d'entraînement 26 du disque mené 10, tandis qu'un second balancier 41, également de forme sensiblement octogonale, et disposé au-dessus du premier balancier 40, est monté pivotant, de manière analogue, par deux seconds paliers tels que 43a (l'autre n'étant pas visible sur les figures 6 et 7), de même nature que les paliers 42a et 42b, sur les doigts d'entraînement 27 du disque mené 11, de sorte que le second balancier 41 soit basculant par rapport au mât 7 autour du second axe diamétral Y-Y.

Les deux balanciers 40 et 41 sont ainsi entraînés en rotation chacun par l'un respectivement des disques menés 10 et 11, eux-mêmes entraînés par le mât 7 et le disque menant 9, autour de l'axe Z-Z du mât 7, tout en étant montés pivotants chacun autour de l'un respectivement de deux axes diamétraux, normalement perpendiculaires, X-X, Y-Y et sécants, qui sont les axes des deux bras d'entraînement en rotation 26-26 et 27-27.

De plus, le premier balancier 40 est articulé sur un carter ou corps de moyeu, tel que celui représenté en 39 avec une forme annulaire sensiblement hexagonale en plan sur les figures 9 et 10, par deux premières liaisons rotulées telles que 45a (voir figure 8), comportant de préférence des rotules lamifiées, combinées chacune à un palier lamifié cylindrique ou conique, et qui sont diamétralement opposées par rapport à l'axe Z-Z du mât 7, et centrées chacune sur le second axe diamétral Y-Y, en étant retenues dans deux petits manchons coaxialement autour de l'axe Y-Y sur le balancier 40, en position neutre ou de repos du rotor, les deux premières liaisons rotulées telle que 45a restant centrées sensiblement dans un plan diamétral, défini par l'axe Z-Z et par le second axe diamétral Y-Y, lorsque le premier balancier 40 est basculé autour du premier axe diamétral X-X.

De manière analogue, le second balancier 41 est articulé sur un corps de moyeu tel que 39 sur les figures 9 et 10 par deux secondes liaisons rotulées 46a et 46b, comportant également de préférence des rotules lamifiées combinées à des paliers lamifiés cylindriques ou coniques, et, diamétralement opposées par rapport à l'axe Z-Z et centrées chacune, au repos ou en position neutre du rotor, sur le premier axe diamétral X-X, en étant retenues dans des petits manchons 47 coaxiaux autour de l'axe X-X sur le balancier 41, ces secondes liaisons rotulées 46a et 46b restant sensiblement centrées dans un plan diamétral défini par l'axe Z-Z et le premier axe diamétral X-X lorsque le second balancier 41 est basculé autour du second axe diamétral Y-Y.

Dans ce rotor, le moyeu tel que 39 sur les figures 9 et 10, est relié au mât 7 par les deux balanciers croisés 40 et 41, articulés à l'intérieur du moyeu tel que 39 par les liaisons rotulées, de préférence lamifiées telles que 45a et 46a, 46b, et articulés à pivotement autour des deux bras d'entraînement diamétraux 26-26 et 27-27 perpendiculaires, au repos, par des paliers 42a, 42b et tels que 43a, selon un agencement constituant simultanément un mécanisme de basculement du moyeu et des pales, permettant un pivotement d'ensemble du moyeu autour de tout axe de battement coupant l'axe Z-Z du mât 7 et orienté selon un azimut quelconque autour de l'axe Z-Z, et un mécanisme d'entraînement homocinétique du moyeu et des pales autour d'un axe géométrique de rotation du moyeu, qui peut être incliné dans toute direction autour de l'axe Z-Z du mât 7 en commandant les pivotements des balanciers 40 et 41 autour de leurs axes diamétraux respectifs X-X et Y-Y. La transmission du couple entre le mât 7 et le moyeu est assurée par deux chaînes de transmission comportant, chacune, le mât 7, l'arbre menant 9, l'un respectivement des disques menés 10 et 11, et donc le balancier 10 ou 11 pivotant sur le disque mené 10 ou 11, les deux paliers 42a, 42b ou telles que 43b correspondants, les deux liaisons rotulées telles que 45a ou 46a, 46b correspondantes et le moyeu.

Avec un tel dispositif de basculement à deux balanciers 40 et 41, on sait qu'un basculement du disque rotor et donc du moyeu par rapport à l'axe Z-Z du mât 7 induit une rotation relative cyclique de ces deux balanciers 40 et 41, à la fréquence de 2 Ω (où Ω et la fréquence de rotation du rotor), les deux balanciers 40 et 41 effectuant des mouvements de rotation en sens opposés et d'amplitude égale autour de l'axe d'entraînement et dans un plan perpendiculaire à cet axe d'entraînement. Le mécanisme différentiel 8 compense cinématiquement cette rotation relative cyclique des deux balanciers 40 et 41, grâce aux axes de liaison 28, liant les disques menés 10 et 11 au disque menant 9, et qui s'inclinent faiblement en accompagnant les rotations de sens opposés des disques menés 10 et 11 autour de l'axe Z-Z du mât 7. Simultanément, le couple statique transmis par le mât 7 aux deux balanciers 40 et 41 est partagé par le disque menant 9 entre les deux disques menés 10 et 11, grâce aux axes de liaison 28. Cette faculté du mécanisme différentiel 8 à permettre tout mouvement relatif des deux balanciers 40 et 41 dans le plan perpendiculaire à l'axe d'entraînement supprime le caractère hyperstatique d'un dispositif dans lequel le mécanisme de basculement à deux balanciers serait directement lié au mât 7.

Le caractère homocinétique est ainsi obtenu par la compatibilité cinématique entre les moyens de basculement et d'entraînement à deux balanciers 40 et 41, grâce au mécanisme différentiel 8.

Le mécanisme différentiel 8 à course réduite permet d'éviter le recours à des paliers lamifiés et/ou des articulations lamifiées à raideurs calibrées de liaison des balanciers 40 et 41 au moyeu et au mât 7. Mais ces paliers lamifiés et liaisons rotulées lamifiées sont de préférence introduits entre les balanciers 40 et 41, d'une part, et les disques menés 10 et 11 et le moyeu, d'autre part, afin de réduire les frottements induits par la cinématique des deux balanciers 40 et 41 et d'augmenter ainsi la durée de vie des composants.

La transmission des efforts provenant du rotor (portance et efforts coplanaires) au mât 7 est assurée, du moyeu vers le mât 7, par l'intermédiaire des deux balanciers 40 et 41, qui, en sens opposé, transmettent le couple du mât 7 au moyeu. Les paliers annulaires radiaux 36 et les bagues axiales 38, permettant les rotations relatives entre les disques menés 10 et 11 (liés aux balanciers 40, 41) et le disque menant 9 lié au mât 7, participent à la transmission de l'effort de portance et des efforts coplanaires, la reprise de la portance étant également assurée grâce à la présence du dispositif 13 de précharge axiale avec déformation élastique de l'empilement des trois disques 9, 10 et 11 et des quatre paliers annulaires radiaux 36 contre l'épaulement 12 du mât 7.

La réalisation des axes de liaison 28 sous la forme de triple rotules lamifiées 29, 30 et 31 associées à des paliers lamifiés cylindriques 35 permet d'améliorer la résistance de ces axes de liaison 28, qui présentent une certaine souplesse parallèlement à leur axe géométrique longitudinal A-A, grâce à la présence notamment des paliers lamifiés cylindriques 35, de manière à permettre un partage homogène des efforts transitant par chaque axe de liaison 28, tout en évitant que les rotules d'extrémité 33 de chaque axe 28 ne se déchaussent des disques menés 10 et 11 lorsque les axes de liaison 28 sont inclinés par des rotations en sens opposés des disques menés 10 et 11 par rapport au disque menant 9. Les éléments lamifiés des rotules et des paliers 35 des axes 28 permettent également, en cas d'inclinaison de ces axes 28, une compression centripète nécessaire du fait que les rotules 33 d'extrémité tendent à s'écarter de l'axe Z-Z du mât 7, tout en étant maintenues chacune à une distance constante de cet axe Z-Z par le disque mené 10 ou 11 dans laquelle chaque rotule 33 est maintenue. Ces éléments lamifiés permettent enfin non seulement un déplacement axial relatif des rotules des axes 28 et des trois disques 9, 10 et 11, mais également une rotation relative entre chaque axe 28 et chacun de ces trois disques 9, 10 et 11 dans lesquels cet axe 28 est rotulé. Mais, la souplesse introduite par ces éléments lamifiés des axes de liaison 28 n'est pas critique pour le caractère homocinétique de la transmission de couple.

Lorsque le dispositif à deux balanciers 40 et 41 n'est pas enveloppé par des demi-butées sphériques de battement, les paliers lamifiés tels que 42a, 42b et 43a et/ou les liaisons rotulées et lamifiées telles que 45a, 46a et 46b doivent pouvoir transmettre les sollicitations provenant du rotor (portance et efforts coplanaires), et, à cet effet, au moins ces paliers lamifiés de liaison entre les balanciers 40 et 41 et les disques menés 10 et 11 et/ou au moins ces liaisons rotulées lamifiées d'articulation des balanciers 40 et 41 au moyeu doivent pouvoir transmettre un effort axial, selon l'axe diamétral X-X ou Y-Y correspondant, qui est simultanément un axe de révolution des éléments lamifiés constitutifs de ces paliers et liaisons rotulées, ce qui peut être assuré, de manière simple, par l'utilisation d'éléments lamifiés tronconiques pour réaliser ces paliers tels que 42a, 42b et 43a, et/ou les liaisons rotulées telles que 45a, 46a et 46b.

Par contre, en présence de demi-butées sphériques de battement, enveloppant le dispositif des balanciers 40 et 41, pour des raisons dynamiques notamment, et permettant une augmentation de la rigidité en battement cyclique, en participant à la transmission des efforts de portance et coplanaires du moyeu vers le mât 7, de sorte que la reprise de ces efforts ne doit pas être nécessairement assurée par les éléments lamifiés des paliers tels que 42a, 42b et 43a et/ou des liaisons rotulées telles que 45a, 46a et 46b, il n'est pas nécessaire que ces paliers et liaisons rotulées comportent des éléments lamifiés tronconiques, ou tout autre élément lamifié capable de transmettre un effort axial.

Un exemple de rotor avec fonctions découplées de rotulage et d'entraînement du moyeu est décrit ci-après en référence aux figures 9 et 10.

Ce rotor comprend un mécanisme différentiel 8', identique au mécanisme 8 des figures 2 à 6, sauf en ce qui concerne les deux doigts d'entraînement 26' du disque mené interne 10' et les deux doigts d'entraînement 27' du disque mené externe 11', ces doigts 26' et 27' n'étant plus coaxiaux deux-à-deux autour de l'un respectivement de deux axes diamétraux, perpendiculaires au repos, du mât 7', ni en saillie radiale vers l'extérieur du disque mené 10' ou 11' correspondant, par rapport à l'axe Z-Z du mât 7', mais s'étendent vers l'extérieur du disque mené 10' ou 11' correspondant, à partir de deux points diamétralement opposés sur ce disque, et selon deux axes parallèles mais décalés l'un de l'autre dans un même plan radial perpendiculaire à l'axe Z-Z du mât 7', les axes des deux doigts 26' étant orientés selon une direction sensiblement perpendiculaire à la direction d'orientation des axes des deux doigts 27', comme visible sur la figure 9.

Chacun de ces doigts d'entraînement 26' et 27', dont les axes sont donc coplanaires, est engagé et retenu, par un écrou 48 vissé sur l'extrémité externe filetée du doigt 26' ou 27' correspondant, dans l'armature radiale interne 50 d'une rotule lamifiée 49, constituant une liaison rotulée à une extrémité de l'une respectivement de quatre biellettes d'entraînement 51, qui sont régulièrement espacées les unes des autres en direction circonférentielle autour de l'axe Z-Z, en étant disposées sensiblement tangentiellement par rapport à cet axe Z-Z, sensiblement selon les quatre côtés d'un carré, vu en plan, comme représenté sur la figure 9. Chacune des quatre biellettes 51 est équipée, à son autre extrémité longitudinale, d'une autre liaison rotulée constituée d'une seconde rotule lamifiée 52, identique à la rotule lamifiée 49, et dont l'armature radiale interne 53 est engagée et retenue autour de l'un respectivement de quatre embouts 54 cylindriques de fixation sur le carter de moyeu 39, qui entoure le mécanisme différentiel 8' et les quatre biellettes 51 d'entraînement en rotation du carter de moyeu 39 à partir du mât 7' et par l'intermédiaire du mécanisme différentiel 8'.

De manière pratique, chaque embout de fixation 54 est une vis, dont la tête 54a est retenue à l'extérieur du carter de moyeu annulaire 39, et tel qu'un écrou 55 est vissé sur l'extrémité filetée de sa tige, qui traverse l'armature intérieure 53 de la rotule 52 de la bielle 51 correspondante.

Ainsi, comme représenté sur la figure 9, chacun des deux disques menés 10' et 11' est relié, par chacun de ses deux doigts d'entraînement 26' ou 27', à l'une respectivement de deux bielles d'entraînement 51, reliées par ailleurs au carter de moyeu 39 et diamétralement opposées, en s'étendant chacune, en direction circonférentielle autour de l'axe Z-Z, en alternance avec les deux bielles d'entraînement 51 reliées à l'autre disque mené 11' ou 10'.

Dans cet exemple, les organes d'entraînement du carter de moyeu 39, interposés entre ce dernier et le mécanisme différentiel 8', ne sont pas deux balanciers croisés mais quatre biellettes d'entraînement 51, articulées par des liaisons rotulées d'extrémité, d'une part, sur l'un des deux disques menés, pour deux d'entre elles, et sur l'autre des disques menés pour les deux autres bielles, et, d'autre part, sur la face interne du carter annulaire de moyeu 39.

Le sens d'entraînement en rotation du mât 7' et le montage des biellettes 51 sont tels que les biellettes 51 sont sollicitées en traction par la rotation du mécanisme différentiel 8' avec l'arbre 7' pour entraîner le carter de moyeu 39.

Dans ce rotor, les moyens d'entraînement homocinétique sont constitués par la combinaison du mécanisme différentiel 8' et des biellettes d'entraînement 51, dont les liaisons rotulées d'extrémité permettent les débattements nécessaires lorsque le carter de moyeu 39 est basculé avec l'ensemble du moyeu par rapport à l'axe Z-Z du mât 7', alors que le mécanisme différentiel 8' reste radialement lié au mât 7', le mécanisme différentiel 8' fonctionnant exactement de la même manière que dans l'exemple précédent pour partager le couple entre les deux paires de biellettes 51 accouplées chacune à l'un respectivement des deux disques menés 10' et 11', l'intérêt de ce dispositif étant de ne pas générer de contrainte élevée et de ne pas nécessiter de calibrage précis des raideurs des rotules lamifiées 49 et 52 aux extrémités des biellettes 51, ce qui simplifie considérablement la définition de ces biellettes 51.

Une autre différence présentée par le mécanisme différentiel 8' de cet exemple par rapport à celui précédemment décrit, est que le palier annulaire radial 36 disposé axialement à l'intérieur du disque mené interne 10' n'est plus en appui axial sur un épaulement tel que 12 du mât tel que 7 des figures 3 et 4, mais sur un épaulement 12' à une extrémité axiale externe d'une entretoise tubulaire 56 qui entoure le mât 7' et est elle-même en appui axial, par son extrémité axiale interne, contre un support 57 de l'armature radiale interne d'une demi-butée de battement 58, qui est une demi-butée centrale sphérique lamifiée constituant, de manière en soi connue, les moyens de basculement d'ensemble du moyeu, qui rappellent élastiquement le moyeu, et donc le rotor, en position de repos, sensiblement perpendiculairement à l'axe Z-Z du mât 7'.

Cette butée de battement 58 est agencée, dans cet exemple et comme représenté sur la figure 10, en demi-butée sphérique à deux étages, puisque son armature radiale externe 59 est, comme le support d'armature radiale interne 57, liée en rotation au mât 7', par clavetage, cannelures, ou tout autre moyen équivalent, en étant maintenue axialement contre un épaulement 60 du mât 7' par l'empilement axial du support d'armature interne 57, également agencé en entretoise tubulaire, par l'entretoise 56 et par l'empilement axial des trois disques 9', 10' et 11' du mécanisme différentiel 8', sous l'action du dispositif de précharge axiale 13 sur l'extrémité libre du mât 7'.

La butée de battement 58 comporte une armature intermédiaire 61, en forme de coupole et qui est fixée sur la face inférieure d'un plateau de moyeu 62 par une couronne de vis 63 servant, simultanément, à fixer le carter de moyeu 39 sur la face supérieure du plateau de moyeu 62.

Ainsi, le dispositif d'entraînement homocinétique du moyeu 39-62 par rapport au mât 7' est logé et protégé à l'intérieur du carter de moyeu 39, tandis que le plateau de moyeu 62 est suspendu et articulé au mât 7' par la butée de battement 58, et peut être relié aux pales du rotor tripale de cet exemple.

Le plateau de moyeu 62 est, par exemple, un plateau réalisé en matériau composite et en forme d'étoile comportant autant de bras 63 élancés que le rotor comporte de pales, en l'occurrence trois dans cet exemple, pour que chaque pale soit retenue et articulée en pas sur le bras 63 correspondant par des moyens appropriés, partiellement et schématiquement représentés en 64 sur les figures 9 et 10. Ces moyens 64 sont montés, d'une part, à l'extrémité radiale externe (non représentée) de chaque bras 63, et, d'autre part, dans une alvéole 65, ménagée dans la partie des bras 63 adjacente à la partie centrale du plateau de moyeu 62, laquelle partie centrale présente une ouverture centrale 66 pour le passage du mât rotor 7'.

De manière connue, la liaison entre les moyens de retenue et d'articulation 64 dans l'alvéole 65 et les moyens de retenue et d'articulation complémentaires (non représentés) à l'extrémité externe du bras 63 est assurée par une manchette 67 rigide en torsion, solidaire du pied de la pale, et réalisée, par exemple, par deux plaques à l'aplomb l'une au-dessus de l'autre et orientées radialement de sorte à chevaucher le bras 63 de moyeu correspondant. L'extrémité radiale interne de cette manchette 67 est solidaire d'un levier de pas 68 permettant de commander le pas de la pale correspondante.

A noter qu'un tel plateau de moyeu 62 à bras élancés 63 présente à la fois une grande rigidité en traînée et une souplesse appropriée en battement, tout en permettant une disposition favorable du levier de pas 68, dont la chape d'extrémité, pour la liaison à une bielle de commande de pas, est à l'extérieur du plateau de moyeu 62, entre deux bras 63, et tel qu'un couplage pas-battement d'une faible valeur négative peut être retenu, ce qui est particulièrement favorable pour les rotors basculants d'aéronefs convertibles, pour lesquels une faible puissance de commande est également souhaitée, ce qui est effectivement obtenu avec les rotors précédemment décrits, dont l'excentricité de battement est nulle, du fait que les axes de battement des pales coupent l'axe du mât 7 ou 7' grâce au basculement d'ensemble du rotor par son moyeu 39-62 autour d'un point de cet axe Z-Z.

Dans cet exemple, dans lequel les moyens d'entraînement à biellettes 51 et mécanisme différentiel 8' sont cinématiquement compatibles avec les moyens de basculement, à demi-butée sphérique lamifiées centrale 58, cette dernière permet également la reprise de la portance et de l'effort coplanaire provenant des excitations aérodynamiques et inertielles du rotor, en particulier si elle est complétée par une autre demi-butée lamifiée sphérique centrale de battement, enveloppant le carter de moyeu 39 et les moyens d'entraînement homocinétiques logés à l'intérieur de ce dernier, sensiblement symétriquement de l'autre côté du plateau de moyeu 62 par rapport à la demi-butée de battement 58.

Par comparaison, avec les dispositifs connus d'entraînement par biellettes et de basculement par une butée centrale de battement, le rotor des figures 9 et 10 présente l'avantage essentiel que le caractère homocinétique de l'entraînement en rotation du moyeu 39-62 à partir du mât 7' est obtenu grâce à la coopération du mécanisme différentiel 8' avec les biellettes d'entraînement 51 ne nécessitant pas de calibrage précis de leur raideur, et sans génération de contraintes élevées, dans des moyens d'entraînement découplés des moyens de rotulage du moyeu.

Dans le premier exemple, en référence aux figures 2 à 8, il est clair que le dispositif à deux balanciers 40 et 41 peut être articulé à l'intérieur d'un carter de moyeu fixé, comme dans le second exemple des figures 9 et 10, à un plateau de moyeu en étoile à bras supportant chacun une pale par des moyens de retenue et d'articulation en pas, comme décrit ci-dessus.

Dans les deux exemples, le rotor tripale des figures 9 et 10 peut être un rotor quadripale, ainsi que le rotor associé au dispositif de la figure 8.

Enfin, dans tous les exemples de réalisation, les éléments lamifiés tels que paliers cylindriques ou tronconiques, et les rotules lamifiées, éventuellement associées à des paliers cylindriques ou tronconiques, sont des éléments comportant deux armatures en position radiale interne et radiale externe par rapport à leur axe de symétrie, et chacune des armatures est fixée à l'un respectivement des deux organes entre lesquels chaque élément lamifié est monté et qu'il articule l'un à l'autre.

## Revendications

1. Rotor de giravion à entraînement homocinétique, en particulier pour un aéronef convertible à au moins un rotor basculant (4), comprenant :
- un mât (7, 7') rotor, apte à être entraîné en rotation autour de son axe longitudinal (Z-Z),
- un moyeu (39-62), relié audit mât (7, 7') par des moyens d'entraînement homocinétique et par des moyens de basculement, permettant un pivotement d'ensemble du moyeu (39-62) autour de tout axe de battement concourant avec l'axe (Z-Z) du mât et perpendiculaire audit axe (Z-Z) du mât, de sorte que ledit moyeu (39-62) est apte à être entraîné en rotation homocinétique par ledit mât (7, 7'), autour d'un axe géométrique de rotation du moyeu (39-62) pouvant être incliné dans toute direction autour de l'axe (Z-Z) du mât (7, 7'), et
- au moins deux pales, reliées chacune audit moyeu (39-62) par des moyens (64) de retenue et d'articulation en pas de la pale correspondante,
**caractérisé en ce que** lesdits moyens d'entraînement homocinétique comprennent un mécanisme différentiel (8, 8') de partage du couple statique et autorisant un mouvement relatif, dans un plan perpendiculaire audit axe (Z-Z) du mât (7, 7'), entre au moins deux organes (40, 41 ; 51) d'entraînement du moyeu (39-62), ledit mécanisme différentiel (8, 8') comprenant un ensemble de trois disques (9, 10, 11 ; 9', 10', 11') sensiblement superposés et sensiblement coaxiaux autour dudit axe (Z-Z) du mât (7), et dont un premier disque (9, 9'), disposé entre les deux autres (10, 11 ; 10', 11') selon ledit axe (Z-Z) du mât (7), est un disque menant (9, 9'), solidaire en rotation dudit mât (7, 7'), et relié à chacun des deux autres disques (10, 11 ; 10', 11'), qui sont menés, par au moins un axe de liaison (28), sensiblement parallèle audit axe (Z-Z) du mât (7, 7'), et articulé sur chacun des trois disques (9, 10, 11 ; 9', 10', 11') par l'une respectivement de trois liaisons rotulées (29, 30, 31) sensiblement centrées sur l'axe géométrique longitudinal (A-A) dudit axe de liaison (28), chacun des deux disques menés (10, 11 ; 10', 11') étant relié au moyeu (39-62) par l'un au moins desdits organes d'entraînement (40, 41 ; 51), qui sont chacun également articulé au moyeu (39-62), de sorte à l'entraîner en rotation autour dudit axe géométrique de rotation du moyeu (39-62).

2. Rotor selon la revendication 1, **caractérisé en ce que** le mécanisme différentiel (8, 8') comprend au moins deux axes de liaison (28) des trois disques (9, 10, 11 ; 9', 10', 11'), lesdits axes de liaison (28) étant régulièrement disposés en direction circonférentielle autour dudit axe (Z-Z) du mât (7, 7').

3. Rotor selon la revendication 2, **caractérisé en ce que** le mécanisme différentiel (8, 8') comprend au moins deux ensembles d'au moins deux axes de liaison (28) voisins par ensemble, lesdits ensembles d'axes de liaison (28) étant régulièrement répartis en direction circonférentielle autour dudit axe (Z-Z) du mât (7, 7').

4. Rotor selon l'une quelconque des revendications 1 à 3, **caractérisé en ce que** chaque axe de liaison (28) est articulé dans le disque menant (9, 9') par une liaison rotulée centrale (29) de plus grand diamètre que le diamètre commun à deux liaisons rotulées (30, 31) d'extrémité dudit axe de liaison (28), et par chacune desquelles ledit axe de liaison (28) est articulé dans l'un respectivement des deux disques menés (10, 11 ; 10', 11').

5. Rotor selon l'une quelconque des revendications 1 à 4, **caractérisé en ce que** chaque axe de liaison (28) est un axe à triple rotule (32, 33).

6. Rotor selon l'une quelconque des revendications 4 et 5, **caractérisé en ce que** chacune des trois liaisons rotulées (29, 30, 31), de préférence lamifiées, de chaque axe de liaison (28) comprend également un palier lamifié cylindrique (34, 31), sensiblement coaxial audit axe de liaison (28).

7. Rotor selon l'une quelconque des revendications 1 à 6, **caractérisé en ce que** chaque disque mené (10, 11 ; 10', 11') est monté axialement entre deux paliers annulaires radiaux (36), entourant ledit mât (7, 7') et sensiblement coaxiaux autour dudit axe (Z-Z) du mât, et permettant une rotation, autour dudit axe (Z-Z) du mât (7, 7'), de chacun desdits disques menés (10, 11 ; 10', 11') par rapport audit mât (7, 7') et au disque menant (9, 9').

8. Rotor selon l'une quelconque des revendications 1 à 7, **caractérisé en ce qu'**au moins une bague axiale (38) est montée entre une partie périphérique (20, 21) et axialement décalée de chaque disque mené (10, 11 ; 10', 11') et le disque menant (9, 9'), afin de permettre une rotation relative, autour dudit axe (Z-Z) du mât (7), des disques menés (10, 11 ; 10', 11') par rapport au disque menant (9, 9') et audit mât (7, 7').

9. Rotor selon l'une des revendications 7 et 8, **caractérisé en ce que** lesdits paliers annulaires radiaux (36) et/ou lesdites bagues axiales (38) sont des paliers et/ou bagues lisses ou comportant des éléments lamifiés cylindriques, et/ou tronconiques, et/ou sphériques.

10. Rotor selon l'une quelconque des revendications 1 à 9, **caractérisé en ce que** le disque menant (9, 9') est solidaire en rotation dudit mât (7, 7') par des cannelures axiales internes (14) en prise avec des cannelures axiales externes sur une partie d'extrémité (7a) dudit mât (7, 7'), axialement du côté opposé à la base dudit mât (7, 7'), par laquelle ce dernier est entraîné en rotation.

11. Rotor selon l'une quelconque des revendications 1 à 10, **caractérisé en ce qu'**un premier (10) des deux disques menés (10, 11) est disposé axialement entre le disque menant (9) et un épaulement (12) radial externe solidaire en rotation dudit mât (7), tandis que le deuxième disque mené (11) est disposé axialement entre le disque menant (9) et un dispositif de précharge axiale (13) de l'ensemble des trois disques (9, 10, 11), et monté sur l'extrémité libre (7b) dudit mât (7).

12. Rotor selon l'une quelconque des revendications 1 à 11, **caractérisé en ce que** chaque disque mené (10, 11 ; 10', 11') supporte deux doigts d'entraînement (26, 27 ; 26', 27') diamétralement opposés par rapport audit axe (Z-Z) du mât (7, 7'), et par lesquels le disque mené (10, 11 ; 10', 11') correspondant est relié à l'un au moins desdits organes d'entraînement (40, 41, 51), les doigts d'entraînement (26, 27 ; 26', 27') des deux disques menés (10, 11 ; 10', 11') s'étendant sensiblement dans un même plan perpendiculaire à l'axe (Z-Z) dudit mât (9).

13. Rotor selon l'une quelconque des revendications 1 à 12, **caractérisé en ce qu'**un premier (10) des disques menés (10, 11) entraîne en rotation, autour dudit axe (Z-Z) du mât (7), et par l'intermédiaire de deux doigts d'entraînement (26) coaxiaux autour d'un premier axe diamétral (X-X) dudit mât (7), un premier organe d'entraînement agencé en premier balancier (40), monté pivotant autour dudit premier axe diamétral (X-X), qui est sensiblement perpendiculaire audit axe (Z-Z) du mât (7), par deux premiers paliers (42a, 42b) diamétralement opposés par rapport audit axe (Z-Z) du mât (7), le second disque mené (11) entraînant en rotation, autour dudit axe (Z-Z) du mât (7), et également par l'intermédiaire de deux doigts d'entraînement (Z-Z) coaxiaux autour d'un second axe diamétral (Y-Y) du mât (7), un second organe d'entraînement, agencé en second balancier (41), monté pivotant autour dudit second axe diamétral (Y-Y), qui est sensiblement perpendiculaire audit axe (Z-Z) du mât (7) et audit premier axe diamétral (X-X), et concourant avec ce dernier sur ledit axe (Z-Z) du mât, par deux seconds paliers (43a) diamétralement opposés par rapport audit axe (Z-Z) du mât, ledit premier balancier (40) étant de plus articulé sur le moyeu (39-62) par deux premières liaisons rotulées (45a), diamétralement opposées par rapport audit axe (Z-Z) du mât, et centrées chacune sensiblement dans un plan défini par ledit axe (Z-Z) du mât et ledit second axe diamétral (Y-Y), et ledit second balancier (41) étant de plus articulé sur ledit moyeu (39-62) par deux secondes liaisons rotulées (46a, 46b), diamétralement opposées par rapport audit axe (Z-Z) du mât et centrées chacune sensiblement dans un plan défini par ledit axe (Z-Z) du mât et ledit premier axe diamétral (X-X), de sorte que les balanciers (40, 41), leurs paliers (42a, 42b, 43a) de pivotement sur les disques menés (10, 11) et leurs liaisons rotulées (45a ; 46a, 46b) d'articulation sur le moyeu (39-62) constituent des moyens de basculement d'ensemble du moyeu (39-62) qui appartiennent aux moyens d'entraînement homocinétique du moyeu par le mât (7).

14. Rotor selon la revendication 13, **caractérisé en ce que** les paliers (42a, 42b, 43a) de pivotement des balanciers (40, 41) sur les disques menés (10, 11) et/ou les liaisons rotulées (45a, 46a, 46b) d'articulation des balanciers (40, 41) sur le moyeu (39-62) comprennent des éléments lamifiés cylindriques, sphériques, tronconiques, ou une combinaison de tels éléments.

15. Rotor selon l'une quelconque des revendications 1 à 12, **caractérisé en ce que** chacun des disques menés (10, 11) entraîne en rotation, autour dudit axe (Z-Z) du mât (7), et par l'intermédiaire de deux doigts d'entraînement (26', 27'), deux organes d'entraînement agencés en biellettes (51), diamétralement opposées et orientées sensiblement tangentiellement par rapport audit axe (Z-Z) du mât (7'), les biellettes d'entraînement étant régulièrement disposées autour dudit axe (Z-Z) du mât (7'), de sorte que chacune des deux biellettes (51) entraînées par l'un des disques menés (10', 11') est entre les deux biellettes (51) entraînées par l'autre disque mené (11', 10'), chaque biellette d'entraînement (51) étant articulée, par l'une de ses extrémités, sur l'un respectivement des deux doigts d'entraînement (26', 27') de l'un respectivement des disques menés (10', 11'), et, par son autre extrémité, sur un embout (54) de fixation au moyeu (39-62).

16. Rotor selon la revendication 15, **caractérisé en ce que** chaque biellette d'entraînement (51 est équipée, à chacune de ses deux extrémités, d'une liaison rotulée, comportant de préférence une rotule lamifiée (49, 52), pour l'articulation d'une extrémité de ladite biellette (51) sur un doigt d'entraînement (26', 27') d'un disque mené (10', 11'), et l'articulation de l'autre extrémité de ladite biellette (51) sur un embout (54) de fixation au moyeu (39-62).

17. Rotor selon l'une quelconque des revendications 1 à 16, **caractérisé en ce que** lesdits organes (40, 41 ; 51) d'entraînement en rotation du moyeu (39-62) à partir des disques menés (10, 11 ; 10', 11') sont reliés à un carter (39) de moyeu, qui entoure lesdits organes d'entraînement (40, 41 ; 51) et ledit ensemble de trois disques (9, 10, 11 ; 9', 10', 11'), et qui est fixé à un plateau (62) de moyeu relié aux pales et présentant une ouverture centrale (66) de passage dudit mât (7, 7').

18. Rotor selon la revendication 17, **caractérisé en ce que** ledit plateau de moyeu (62) est un plateau en forme d'étoile à bras (63) élancés en nombre égal au nombre des pales et sur chacun desquels sont montés les moyens (64) de retenue et d'articulation en pas d'une pale.

19. Rotor selon l'une quelconque des revendications 1 à 18, **caractérisé en ce que** le moyeu (39-62) est également relié au mât (7') par au moins un moyen (58) de rappel élastique du moyeu dans une position de repos sensiblement perpendiculaire audit axe (Z-Z) du mât (7').

20. Rotor selon la revendication 19, **caractérisé en ce que** ledit moyen de rappel élastique comprend au moins une demi-butée (58) sphérique lamifiée centrale, dont une armature (61) est liée au moyeu (39-62) et au moins une armature (57, 59) est solidaire en rotation du mât (7').

21. Aéronef convertible, comprenant au moins un rotor basculant, destiné à basculer entre une configuration avion, dans laquelle ledit rotor se comporte comme une hélice, et une configuration hélicoptère, dans laquelle ledit rotor se comporte comme un rotor sustentateur d'hélicoptère, **caractérisé en ce que** ledit rotor est un rotor à entraînement homocinétique selon l'une quelconque des revendications 1 à 20.

## Patentansprüche

1. Rotor eines Drehflügelflugzeugs mit homokinetischem Antrieb, insbesondere für ein Verwandlungsflugzeug mit mindestens einem Kipprotor (4), der aufweist:
- ein Rotormast (7, 7'), der um seine Längsachse (Z-Z) in Drehung versetzt werden kann,
- eine Nabe (39-62), die mit dem Mast (7, 7') über homokinetische Antriebsmittel und über Kippmittel verbunden ist, die ein Schwenken der gesamten Nabe (39-62) um jede Schlagachse ermöglichen, die sich mit der Achse (Z-Z) des Masts kreuzt und zur Achse (Z-Z) des Masts senkrecht liegt, so dass die Nabe (39-62) vom Mast (7, 7') in eine homokinetische Drehung um eine geometrische Drehachse der Nabe (39-62) versetzt werden kann, die in jeder Richtung um die Achse (Z-Z) des Masts (7, 7') geneigt werden kann, und
- mindestens zwei Blätter, die je mit der Nabe (39-62) über Halte- und Blattverstellungs-Gelenkmittel (64) des entsprechenden Blatts verbunden sind,
**dadurch gekennzeichnet, dass** die homokinetischen Antriebsmittel ein statisches Drehmomentaufteilungs-Differentialgetriebe (8, 8') aufweisen, das eine relative Bewegung in einer Ebene senkrecht zur Achse (Z-Z) des Masts (7, 7') zwischen mindestens zwei Antriebsorganen (40, 41; 51) der Nabe (39-62) erlaubt, wobei das Differentialgetriebe (8, 8') eine Einheit von drei Scheiben (9, 10, 11; 9', 10', 11') aufweist, die im wesentlichen übereinander angeordnet und im wesentlichen um die Achse (Z-Z) des Masts (7, 7') koaxial sind, und von denen eine erste Scheibe (9, 9') die zwischen den beiden anderen (10, 11; 10', 11') gemäß der Achse (Z-Z) des Masts (7) angeordnet ist, eine in Drehung fest mit dem Mast (7, 7') verbundene Antriebsscheibe (9, 9') ist, die mit jeder der beiden anderen Scheiben (10, 11; 10', 11') verbunden ist, die über mindestens eine Verbindungsachse (28) angetrieben werden, die im wesentlichen parallel zur Achse (Z-Z) des Masts (7, 7') liegt und an jede der drei Scheiben (9, 10, 11; 9', 10', 11') über eine von drei Kugelgelenkverbindungen (29, 30, 31) angelenkt ist, die im wesentlichen auf die geometrische Längsachse (A-A) der Verbindungsachse (28) zentriert sind, wobei jede der beiden angetriebenen Scheiben (10, 11; 10', 11') mit der Nabe (39-62) über mindestens eines der Antriebsorgane (40, 41; 51) verbunden ist, die je ebenfalls an die Nabe (39-62) angelenkt sind, um sie um die geometrische Drehachse der Nabe (39-62} in Drehung zu versetzen.

2. Rotor nach Anspruch 1, **dadurch gekennzeichnet, dass** das Differentialgetriebe (8, 8') mindestens zwei Verbindungsachsen (28) der drei Scheiben (9, 10, 11; 9', 10', 11 ') aufweist, wobei die Verbindungsachsen (28) gleichmäßig in Umfangsrichtung um die Achse (Z-Z) des Masts (7, 7') verteilt sind.

3. Rotor nach Anspruch 2, **dadurch gekennzeichnet, dass** das Differentialgetriebe (8, 8') mindestens zwei Einheiten von mindestens zwei benachbarten Verbindungsachsen (28) pro Einheit aufweist, wobei die Einheiten von Verbindungsachsen (28) gleichmäßig in Umfangsrichtung um die Achse (Z-Z) des Masts (7, 7') verteilt sind.

4. Rotor nach einem der Ansprüche 1 bis 3, **dadurch gekennzeichnet, dass** jede Verbindungsachse (28) in der Antriebsscheibe (9, 9') über eine zentrale Kugelgelenkverbindung (29) angelenkt ist, die einen größeren Durchmesser als der zwei Kugelgelenkverbindungen (30, 31) am Ende der Verbindungsachse (28) gemeinsame Durchmesser aufweist, und über jede von denen die Verbindungsachse (28) in einer der beiden angetriebenen Scheiben (10, 11; 10', 11') angelenkt ist.

5. Rotor nach einem der Ansprüche 1 bis 4, **dadurch gekennzeichnet, dass** jede Verbindungsachse (28) drei Kugelgelenke (32, 33) aufweist.

6. Rotor nach einem der Ansprüche 4 und 5, **dadurch gekennzeichnet, dass** jede der drei vorzugsweise kunststoffbeschichteten Kugelgelenkverbindungen (29, 30, 31) jeder Verbindungsachse (28) auch ein kunststoffbeschichtetes, zylindrisches Lager (34, 31) aufweist, das im wesentlichen koaxial zur Verbindungsachse (28) liegt.

7. Rotor nach einem der Ansprüche 1 bis 6, **dadurch gekennzeichnet, dass** jede angetriebene Scheibe (10, 11; 10', 11') axial zwischen zwei ringförmigen Radiallagern (36) montiert ist, die den Mast (7, 7') umgeben und im wesentlichen koaxial um die Achse (Z-Z) des Masts (7, 7') sind und eine Drehung jeder der angetriebenen Scheiben (10, 11; 10', 11') bezüglich des Masts (7, 7') und der Antriebsscheibe (9, 9') um die Achse (Z-Z) des Masts (7, 7') erlauben.

8. Rotor nach einem der Ansprüche 1 bis 7, **dadurch gekennzeichnet, dass** mindestens ein axialer Ring (38) zwischen einem peripheren und axial verschobenen Bereich (20, 21) jeder angetriebenen Scheibe (10, 11; 10', 11 ') und der Antriebsscheibe (9, 9') montiert ist, um eine Drehung der angetriebenen Scheiben (10, 11; 10', 11') bezüglich der Antriebsscheibe (9, 9') und des Masts (7, 7') um die Achse (Z-Z) des Masts (7) zu ermöglichen.

9. Rotor nach einem der Ansprüche 7 und 8, **dadurch gekennzeichnet, dass** die ringförmigen Radiallager (36) und/oder die axialen Ringe (38) glatte Lager und/ oder Ringe sind, oder zylindrische und/oder kegelstumpfförmige und/oder kugelförmige kunststoffbeschichtete Elemente aufweisen.

10. Rotor nach einem der Ansprüche 1 bis 9, **dadurch gekennzeichnet, dass** die Antriebsscheibe (9, 9') über innere axiale Rillen (14) in Drehung fest mit dem Mast (7, 7') verbunden ist, die mit äußeren axialen Rillen in einem axial auf der der Basis des Masts (7, 7'), über die der Mast in Drehung versetzt wird, entgegengesetzten Seite befindlichen Endbereich (7a) des Masts (7, 7') in Eingriff stehen.

11. Rotor nach einem der Ansprüche 1 bis 10, **dadurch gekennzeichnet, dass** eine erste (10) der beiden angetriebenen Scheiben (10, 11) axial zwischen der Antriebsscheibe (9) und einer radial äußeren Schulter (12) angeordnet ist, die in Drehung fest mit dem Mast (7) verbunden ist, während die zweite angetriebene Scheibe (11) axial zwischen der Antriebsscheibe (9) und einer axialen Vorspannvorrichtung (13) der Einheit von drei Scheiben (9, 10, 11) angeordnet ist, die auf das freie Ende (7b) des Masts (7) montiert ist.

12. Rotor nach einem der Ansprüche 1 bis 11, **dadurch gekennzeichnet, dass** jede angetriebene Scheibe (10, 11; 10', 11') zwei Antriebsfinger (26, 27; 26', 27') trägt, die einander bezüglich der Achse (Z-Z) des Masts (7, 7') diametral gegenüberliegen und über die die entsprechende angetriebene Scheibe (10, 11; 10', 11') mit mindestens einem der Antriebsorgane (40, 41, 51) verbunden ist, wobei die Antriebsfinger (26, 27; 26', 27') der beiden angetriebenen Scheiben (10, 11; 10', 11') sich im wesentlichen in der gleichen Ebene senkrecht zur Achse (Z-Z) des Masts (7) erstrecken.

13. Rotor nach einem der Ansprüche 1 bis 12, **dadurch gekennzeichnet, dass** eine erste (10) der angetriebenen Scheiben (10, 11) um die Achse (Z-Z) des Masts (7), und mit Hilfe von zwei koaxialen Antriebsfingern (26) um eine erste diametrale Achse (X-X) des Masts (7), ein erstes Antriebsorgan in Drehung versetzt, das als erste Schwinge (40) ausgebildet ist, die um die erste diametrale Achse (X-X), die im wesentlichen senkrecht zur Achse (ZT-Z) des Masts (7) liegt, über zwei erste Lager (42a, 42b), die einander bezüglich der Achse (Z-Z) des Masts (7) diametral gegenüberliegen, schwenkbar montiert ist, während die zweite angetriebene Scheibe (11) um die Achse (Z-Z) des Masts (7) und ebenfalls mit Hilfe von zwei um eine zweite diametrale Achse (Y-Y) des Masts koaxialen Antriebsfingern (27) ein zweites Antriebsorgan in Drehung versetzt, das als zweite Schwinge (41) ausgebildet ist, die um die zweite diametrale Achse (Y-Y), die im wesentlichen senkrecht zur Achse (Z-Z) des Masts (7) und zur ersten diametralen Achse (X-X) liegt und sich mit dieser auf der Achse (Z-Z) des Masts kreuzt, über zwei einander bezüglich der Achse (Z-Z) des Masts diametral gegenüberliegende zweite Lager (43a) schwenkbar montiert ist, wobei die erste Schwinge (40) außerdem über zwei erste Kugelgelenkverbindungen (45a) an die Nabe (39-62) angelenkt ist, die einander bezüglich der Achse (Z-Z) des Masts diametral gegenüberliegen und je im wesentlichen in einer von der Achse (Z-Z) des Masts und der zweiten diametralen Achse (Y-Y) definierten Ebene zentriert sind, und die zweite Schwinge (41) außerdem über zwei zweite Kugelgelenkverbindungen (46a, 46b) an die Nabe (39-62) angelenkt ist, die einander bezüglich der Achse des Masts diametral gegenüberliegen und je im wesentlichen in einer von der Achse (Z-Z) des Masts und der ersten diametralen Achse (X-X) definierten Ebene zentriert sind, so dass die Schwingen (40, 41), ihre Schwenklager (42a, 42b, 43a) auf den angetriebenen Scheiben (10, 11) und ihre Kugelgelenkverbindungen (45a; 46a, 46b) zum Anlenken an die Nabe (39-62) Mittel zum Kippen der Gesamtheit der Nabe (39-62) bilden, die zu den homokinetischen Antriebsmitteln der Nabe durch den Mast (7) gehören.

14. Rotor nach Anspruch 13, **dadurch gekennzeichnet, dass** die Schwenklager (42a, 42b, 43a) der Schwingen (40, 41) auf den angetriebenen Scheiben (10, 11) und/oder die Kugelgelenkverbindungen (45a, 46a, 46b) zum Anlenken der Schwingen (40, 41) an die Nabe (39-62) kunststoffbeschichtete, zylindrische, kugelförmige, kegelstumpfförmige Elemente oder eine Kombination davon aufweisen.

15. Rotor nach einem der Ansprüche 1 bis 12, **dadurch gekennzeichnet, dass** jede der angetriebenen Scheiben (10, 11) zwei als Schwingarme (51) ausgebildete, einander diametral gegenüberliegende und im wesentlichen tangential bezüglich der Achse (Z-Z) des Masts (7') ausgerichtete Antriebsorgane (26', 27') um die Achse (X-X) des Masts (7) und mit Hilfe von zwei Antriebsfingern (26', 27') in Drehung versetzt, wobei die Antriebsschwingarme gleichmäßig um die Achse (Z-Z) des Masts (7') herum angeordnet sind, so dass jeder der beiden Schwingarme (51), die von einer der angetriebenen Scheiben (10', 11') angetrieben werden, sich zwischen den beiden Schwingarmen (51) befindet, die von der anderen angetriebenen Scheibe (11', 10') angetrieben werden, wobei jeder Antriebsschwingarm (51) mit einem seiner Enden an einen der beiden Antriebsfinger (26', 27') einer der angetriebenen Scheiben (10', 11') und mit seinem anderen Ende an ein Ansatzstück (54) zur Befestigung an der Nabe (39-62) angelenkt ist.

16. Rotor nach Anspruch 15, **dadurch gekennzeichnet, dass** jeder Antriebsschwingarm (51) an jedem seiner beiden Enden mit einer Kugelgelenkverbindung ausgestattet ist, die vorzugsweise ein kunststoffbeschichtetes Kugelgelenk (49, 52) zur Anlenkung eines Endes des Schwingarms (51) an einen Antriebsfinger (26', 27') einer angetriebenen Scheibe (10', 11') und zur Anlenkung des anderen Endes des Schwingarms (51) an ein Ansatzstück (54) zur Befestigung an der Nabe (39-62) aufweist.

17. Rotor nach einem der Ansprüche 1 bis 16, **dadurch gekennzeichnet, dass** die Organe (40, 41; 51) für den Drehantrieb der Nabe (39-62) ausgehend von den angetriebenen Scheiben (10, 11; 10', 11') mit einem Nabengehäuse (39) verbunden sind, das die Antriebsorgane (40, 41; 51) und die Einheit von drei Scheiben (9, 10, 11; 9', 10', 11') umgibt und das an einer Nabenplatte (62) befestigt ist, die mit den Blättern verbunden ist und eine zentrale Öffnung (66) für den Durchlass des Masts (7, 7') aufweist.

18. Rotor nach Anspruch 17, **dadurch gekennzeichnet, dass** die Nabenplatte (62) eine sternförmige Platte mit vorstehenden Armen (63) in einer Anzahl gleich der Anzahl von Blättern ist, auf jedem von denen die Halte- und Blattverstellungs-Gelenkmittel (64) eines Blatts montiert sind.

19. Rotor nach einem der Ansprüche 1 bis 18, **dadurch gekennzeichnet, dass** die Nabe (39-62) auch mit dem Mast (7') über mindestens ein Mittel (58) zum elastischen Rückstellen der Nabe (14-38) in eine Ruhestellung im wesentlichen senkrecht zur Achse (Z-Z) des Masts (7') verbunden ist.

20. Rotor nach Anspruch 19, **dadurch gekennzeichnet, dass** das elastische Rückstellmittel mindestens einen kunststoffbeschichteten zentralen kugelförmigen Halbanschlag (58) aufweist, von dem eine Bewehrung (61) mit der Nabe (39-62) und mindestens eine Bewehrung (57, 59) in Drehung fest mit dem Mast (7') verbunden ist.

21. Verwandlungsflugzeug, das mindestens einen Kipprotor aufweist, der dazu bestimmt ist, zwischen einer Flugzeugkonfiguration, in der der Rotor sich wie ein Propeller verhält, und einer Hubschrauberkonfiguration, in der der Rotor sich wie ein Hubrotor eines Hubschraubers verhält, zu kippen, **dadurch gekennzeichnet, dass** der Rotor ein Rotor mit homokinetischem Antrieb gemäß einem der Ansprüche 1 bis 20 ist.

## Claims

1. A rotor for a rotor craft with homokinetic drive, in particular for a convertible aircraft having at least one tilting rotor (4), comprising:
- a rotor mast (7, 7') suitable for being driven in rotation about its longitudinal axis (Z-Z),
- a hub (39 - 62) connected to the said mast (7, 7') by homokinetic drive means and tilting means, enabling the hub (39 - 62) to pivot as a whole about any flapping axis intersecting with the axis (Z-Z) of the mast and perpendicular to the said axis (Z-Z) of the mast, such that the said hub (39 - 62) is suitable for being driven in homokinetic rotation by the said mast (7, 7') about a geometrical axis of rotation of the hub (39 - 62) which may be inclined in any direction about the axis (Z-Z) of the mast (7, 7'), and
- at least two blades, each connected to the said hub (39 - 62) by means (64) for holding and articulating the corresponding blade in its pitch,
**characterised in that** the said homokinetic drive means comprise a differential mechanism (8, 8') for splitting static torque and permitting relative movement in a plane perpendicular to the said axis (Z-Z) of the mast (7, 7') between at least two members (40, 41; 51) for driving the hub (39 - 62), the said differential mechanism (8, 8') comprising a set of three discs (9, 10, 11; 9', 10', 11') which are placed substantially one above the other and substantially coaxially about the said axis (Z-Z) of the mast (7), whereof a first disc (9, 9') which is disposed between the other two (10, 11; 10', 11') along the said axis (Z-Z) of the mast (7) is a driving disc (9, 9') which rotates in fixed relation to the said mast (7, 7') and is connected to each of the other two discs (10, 11; 10', 11'), which are driven through at least one coupling axis (28) substantially parallel to the said axis (Z-Z) of the mast (7, 7') and articulated on each of the three discs (9, 10, 11; 9', 10', 11') by a respective one of three ball joints (29, 30, 31) substantially centred on the longitudinal geometric axis (A-A) of the said coupling axis (28), each of the two driven discs (10, 11; 10', 11') being connected to the hub (39 - 62) by at least one of the said driving members (40, 41; 51), each of which is also articulated to the hub (39 - 62) such that it is driven in rotation about the said geometric axis of rotation of the hub (39 - 62).

2. A rotor according to Claim 1, **characterised in that** the differential mechanism (8, 8') comprises at least two axes (28) coupling the three discs (9, 10, 11; 9', 10', 11'), the said coupling axes (28) being disposed regularly in the circumferential direction about the said axis (Z-Z) of the mast (7, 7').

3. A rotor according to Claim 2, **characterised in that** the differential mechanism (8, 8') comprises at least two sets of at least two coupling axes (28) which are adjacent within a set, the said sets of coupling axes (28) being distributed regularly in the circumferential direction about the said axis (Z-Z) of the mast (7, 7').

4. A rotor according to any one of Claims 1 to 3, **characterised in that** each coupling axis (28) is articulated in the driving disc (9, 9') by a central ball joint (29) which is larger in diameter than the diameter common to two end ball joints (30, 31) of the said coupling axis (28), each of these articulating the said coupling axis (28) in a respective one of the two driven discs (10, 11; 10', 11').

5. A rotor according to any one of Claims 1 to 4, **characterised in that** each coupling axis (28) is a triple-ball axis (32, 33).

6. A rotor according to either of Claims 4 and 5, **characterised in that** each of the three triple-ball joints (29, 30, 31 ), which are preferably of layered construction, of each coupling axis (28) also comprises a cylindrical layered bearing (34, 31) which is substantially coaxial with the said coupling axis (28).

7. A rotor according to any one of Claims 1 to 6, **characterised in that** each driven disc (10, 11; 10', 11') is mounted axially between two radial annular bearings (36) surrounding the said mast (7, 7') and substantially coaxial about the said axis (Z-Z) of the mast and enabling rotation about the said axis (Z-Z) of the mast (7, 7') of each of the said driven discs (10, 11; 10', 11') with respect to the said mast (7, 7') and the driving disc (9, 9').

8. A rotor according to any one of Claims 1 to 7, **characterised in that** at least one axial ring (38) is mounted between a peripheral part (20, 21) axially offset from each driven disc (10, 11; 10', 11') and the driving disc (9, 9') in order to enable relative rotation about the said axis (Z-Z) of the mast (7) by the driven discs (10, 11; 10', 11') with respect to the driving disc (9, 9') and the said mast (7, 7').

9. A rotor according to either of Claims 7 and 8, **characterised in that** the said radial annular bearings (36) and/or the said axial rings (38) are smooth bearings and/or rings or have layered elements which are cylindrical and/or frustoconical and/or spherical.

10. A rotor according to any one of Claims 1 to 9, **characterised in that** the driving disc (9, 9') rotates in fixed relation to the said mast (7, 7') through inner axial channels (14) which engage with outer axial channels on an end part (7a) of the said mast (7, 7') axially on the side opposite the base of the said mast (7, 7'), which drives the latter in rotation.

11. A rotor according to any one of Claims 1 to 10, **characterised in that** a first one (10) of the two driven discs (10, 11) is disposed axially between the driving disc (9) and an outer radial shoulder (12) which rotates in fixed rotation to the said mast (7), while the second driven disc (11) is disposed axially between the driving disc (9) and an axial device (13) for pre-loading the set of three discs (9, 10, 11) which is mounted on the free end (7b) of the said mast (7).

12. A rotor according to any one of Claims 1 to 11, **characterised in that** each driven disc (10, 11; 10', 11') carries two driving fingers (26, 27; 26', 27') which are diametrically opposed with respect to the said axis (Z-Z) of the mast (7, 7') and which couple the corresponding driven disc (10, 11; 10', 11') to at least one of the said driving members (40, 41, 51), the driving fingers (26, 27; 26', 27') of the two driven discs (10, 11; 10', 11') extending substantially in the same plane perpendicular to the axis (Z-Z) of the said mast (9).

13. A rotor according to any one of Claims 1 to 12, **characterised in that** a first one (10) of the driven discs (10, 11) drives in rotation about the said axis (Z-Z) of the mast (7), and through two driving fingers (26) coaxial about a first diametric axis (X-X) of the said mast (7), a first driving member arranged as a first rocker (40) mounted to pivot about the said first diametric axis (X-X), which is substantially perpendicular with respect to the said axis (Z-Z) of the mast (7), through two first bearings (42a, 42b) diametrically opposed with respect to the said axis (Z-Z) of the mast (7), with the second driven disc (11) driving in rotation about the said axis (Z-Z) of the mast (7), also through two driving fingers (Z-Z) which are coaxial about a second diametric axis (Y-Y) of the mast (7), a second driving member arranged as a second rocker (41) mounted to pivot about the said second diametric axis (Y-Y), which is substantially perpendicular with respect to the said axis (Z-Z) of the mast (7) and to the first diametric axis (X-X), and intersecting with the latter on the said axis (Z-Z) of the mast by means of two second bearings (43a) diametrically opposed with respect to the said axis (Z-Z) of the mast, the said first rocker (40) moreover being articulated on the hub (39 - 62) by means of two first ball joints (45a) which are diametrically opposed with respect to the said axis (Z-Z) of the mast, and are each substantially centred in a plane defined by the said axis (Z-Z) of the mast and the said second diametric axis (Y-Y), and the said second rocker (41) moreover being articulated on the said hub (39 - 62) by means of two second ball joints (46a, 46b) which are diametrically opposed with respect to the said axis (Z-Z) of the mast, and are each substantially centred in a plane defined by the said axis (Z-Z) of the mast and the said first diametric axis (X-X) such that the rockers (40, 41), their bearings (42a, 42b, 43a) for pivoting on the driven discs (10, 11) and their ball joints (45a; 46a, 46b) for articulation on the hub (39 - 62) form means of tilting the hub (39 - 62) as a whole, which are part of the means for homokinetic driving of the hub by the mast (7).

14. A rotor according to Claim 13, **characterised in that** the bearings (42a, 42b, 43a) for pivoting the rockers (40, 41) on the driven discs (10, 11) and/or the ball joints (45a, 46a, 46b) for articulating the rockers (40, 41 ) on the hub (39 - 62) comprise layered elements which are cylindrical, spherical, frustoconical or a combination or such elements.

15. A rotor according to any one of Claims 1 to 12, **characterised in that** each of the driven discs (10, 11) drives in rotation, about the said axis (Z-Z) of the mast (7) and through two driving fingers (26', 27'), two driving members arranged as rocker bars (51) which are diametrically opposed and oriented substantially tangentially with respect to the said axis (Z-Z) of the mast (7'), the driving rocker bars being disposed regularly about the said axis (Z-Z) of the mast (7') such that each of the two rocker bars (51) driven by one of the driven discs (10', 11') is between the two rocker bars (51) driven by the other driven disc (11', 10'), each driving rocker bar (51) being articulated by one of its ends on a respective one of the two driving fingers (26', 27') of a respective one of the driven discs (10', 11') and by its other end on an end piece (54) for fixing to the hub (39 - 62).

16. A rotor according to Claim 15, **characterised in that** each driving rocker bar (51) is equipped at each of its two ends with a ball joint preferably having a layered ball (49, 52) for the purpose of articulating an end of the said rocker bar (51) on a driving finger (26', 27') of a driven disc (10', 11') and articulating the other end of the said rocker bar (51) on an end piece (54) for fixing to the hub (39 - 62).

17. A rotor according to any one of Claims 1 to 16, **characterised in that** the said members (40, 41; 51) for driving in rotation the hub (39 - 62) from the driven discs (10, 11; 10', 11') are coupled to a hub framework (39) which surrounds the said driving members (40, 41; 51) and the said set of three discs (9, 10, 11; 9', 10', 11') and is fixed to a hub plate (62) which is coupled to the blades and has a central opening (66) for the said mast (7, 7') to pass through.

18. A rotor according to Claim 17, **characterised in that** the said hub plate (62) is a plate in the form of a star with thin arms (63) which are equal in number to the number of blades, and on each of which means (64) of holding and articulating a blade in its pitch are mounted.

19. A rotor according to any one of Claims 1 to 18, **characterised in that** the hub (39 - 62) is also coupled to the mast (7') by at least one means (58) of resiliently returning the hub to a rest position which is substantially perpendicular to the said axis (Z-Z) of the mast (7').

20. A rotor according to Claim 19, **characterised in that** the said means of resilient return comprises at least one central layered spherical half-stop (58) whereof a reinforcement part (61) is coupled to the hub (39 - 62) and at least one reinforcement part (57, 59) rotates in fixed relation to the mast (7').

21. A convertible aircraft, comprising at least one tilting rotor, intended to switch between an aeroplane configuration in which the said rotor acts in the manner of a propeller and a helicopter configuration in which the said rotor acts in the manner of a rotor supporting a helicopter, **characterised in that** the said rotor is a rotor with homokinetic drive according to any one of Claims 1 to 20.
